# EUROPÄISCHE PATENTSCHRIFT

(11) **EP 3 150 409 B1**
(45) Veröffentlichungstag und Bekanntmachung des Hinweises auf die Patenterteilung: **13.11.2019**
(21) Anmeldenummer: 16190475.0
(22) Anmeldetag: 23.09.2016
(51) Int. Cl.: B60D 1/06, B60D 1/48

(54) **TRÄGERANORDNUNG FÜR EINE ANHÄNGEKUPPLUNG ODER EINEN LASTENTRÄGER**
CARRIER ASSEMBLY FOR A TRAILER COUPLING OR A LOAD BEARER
SYSTÈME DE SUPPORT POUR UN ATTELAGE OU UN SUPPORT DE CHARGE

(30) Priorität: 30.09.2015 DE 102015116550
(43) Veröffentlichungstag der Anmeldung: 05.04.2017
(73) Patentinhaber: WESTFALIA - Automotive GmbH, 33378 Rheda-Wiedenbrück (DE)
(72) Erfinder: Angermann, Kay, D-04720 Döbeln (DE); Kuhlen, Arne, D-59320 Ennigerloh (DE)
(74) Vertreter: Patentanwälte Bregenzer und Reule Partnerschaftsgesellschaft mbB

(56) Entgegenhaltungen:
- EP-A1- 2 607 111
- EP-A1- 2 803 508
- EP-A1- 2 803 510

## Beschreibung

Die Erfindung betrifft eine Trägeranordnung für eine Anhängekupplung oder einen Lastenträger, als Bauteile mindestens umfassend einen Querträger zur Montage an einem Heck einer Karosserie eines Kraftfahrzeugs sowie mindestens eine an dem Querträger angeordnete Halterung für eine Anhängekupplung oder für ein Kupplungsteil eines Lastenträgers, wobei die Trägeranordnung eine erste Trägerkomponente und eine zweite Trägerkomponente aufweist, die mit der ersten Trägerkomponente verbunden ist.

Eine derartige Trägeranordnung ist z.B. EP 2 803 510 A1 aus bekannt.

Zur Verbindung von Trägerkomponenten einer Trägeranordnung, beispielsweise des Querträgers und einer Halterung für die Anhängekupplung oder für einen Lastenträger oder einer Verbindung eines Querträgers mit Seitenträgern, sind Schweißverbindungen bekannt.

Bereiche neben einer Schweißverbindung können jedoch leicht brechen. Zudem ist eine Verschweißung aufwendig.

Es ist daher die Aufgabe der vorliegenden Erfindung, eine verbesserte Verbindung zwischen Bauteilen einer Trägeranordnung bereitzustellen.

Zur Lösung der Aufgabe ist eine Trägeranordnung gemäß der technischen Lehre des Anspruchs 1 vorgesehen.

Es ist dabei ein Grundgedanke, durch die Klammerung der Trägerkomponenten eine Schweißverbindung, insbesondere eine Schmelz-Schweißverbindung, möglichst zu vermeiden. Es ist zudem eine kraftschlüssige und formschlüssige Verbindung erzielt, die hohen Belastungen standhält. Die mindestens eine Klammer bildet beispielsweise eine Art Haltespange. Gleichwohl ist es vorteilhaft, wenn im Zusammenhang mit der Klammerung noch eine Widerstandsschweißverbindung vorhanden ist.

Die mindestens eine Klammer bildet zweckmäßigerweise ein von der ersten Trägerkomponente und der zweiten Trägerkomponente separates Bauteil. Es ist aber auch möglich, dass die mindestens eine Klammer beispielsweise als Stanz-Biegeteil oder Biegeteil oder beides ausgestaltet ist, so dass sie zumindest teilweise von der ersten Trägerkomponente oder der zweiten Trägerkomponente gebildet ist.

Vorzugsweise ist vorgesehen, dass die erste Trägerkomponente und die zweite Trägerkomponente zumindest teilweise einstückig und/oder stoffschlüssig miteinander verbunden sind. Zweckmäßig ist beispielsweise ein mit den Trägerkomponenten einstückiger Verbindungsabschnitt zwischen den Trägerkomponenten. Eine stoffschlüssige Verbindung ist beispielsweise durch eine Schweißverbindung oder Klebeverbindung gegeben. Es versteht sich, dass auch die Kombination aus Stoffschluss und Einstückigkeit möglich ist.

Der Verbindungsabschnitt kann beispielsweise dadurch hergestellt werden, dass eine oder beide Trägerkomponenten aus einem Rohteil, zum Beispiel einem Profilrohr, hergestellt sind, aus welchem ein Ausschnitt ausgeschnitten ist, jedoch der Verbindungsabschnitt stehen bleibt.

Der Verbindungsabschnitt verbindet beispielsweise Seitenwandabschnitte der Trägerkomponenten einstückig miteinander.

Zweckmäßig ist es, wenn der Verbindungsabschnitt an einem äußeren Eckbereich zwischen den Trägerkomponenten angeordnet ist. Diese sind nämlich vorzugsweise zueinander winkelig, wobei sozusagen eine Außenecke durch den Verbindungsabschnitt verbunden ist.

Ohne weiteres können mehrere, beispielsweise in einem Längsabstand zueinander angeordnete, Verbindungsabschnitte zwischen den Trägerkomponenten vorgesehen sein.

Zweckmäßig ist es, wenn der Grundschenkel der mindestens einen Klammer dem Verbindungsabschnitt gegenüberliegt oder zu dem Verbindungsabschnitt winkelig, zum Beispiel rechtwinkelig oder schrägwinkelig, ist. Diese Maßnahme kann zu einer hohen Stabilität der Verbindung zwischen den Trägerkomponenten beitragen.

Weiterhin ist es vorteilhaft, wenn der Verbindungsabschnitt zwischen den Trägerkomponenten zwischen den Seitenschenkeln der mindestens einen Klammer verläuft.

Die erste Trägerkomponente und die zweite Trägerkomponente stützen sich zweckmäßigerweise mit Stützabschnitten aneinander ab. Die mindestens eine Klammer überbrückt die Stützabschnitte. Vorzugsweise ist vorgesehen, dass der Grundschenkel der Klammer oberhalb des Stützabschnitts oder neben dem Stützabschnitt oder an dem Stützabschnitt vorbei verläuft oder angeordnet ist.

Eine vorteilhafte Ausgestaltung sieht vor, dass die erste Trägerkomponente und die zweite Trägerkomponente mit Formschlusskonturen formschlüssig ineinander eingreifen.

Die Formschlusskonturen stützen sich vorzugsweise so gegeneinander ab, dass sie eine Scherbewegung verhindern. Beispielsweise wirken die Formschlusskonturen Scherkräften entgegen, deren Richtung quer zu einer Stützkraft verläuft, mit der die Trägerkomponenten aneinander abgestützt sind. Die Formschlusskonturen können aber auch vorteilhaft sein, die Trägerkomponenten relativ zueinander zu positionieren, insbesondere vor zu positionieren, sodass die anschließende Klammerung optimal geschieht.

Die Formschlusskonturen umfassen beispielsweise eine Verzahnung und/oder Wellenkontur und/oder eine Kreiskontur und/oder eine polygonale Kontur und/oder eine Dreieckkontur.

Die Formschlusskonturen umfassen beispielsweise einen Formschlussvorsprung und eine Formschlussaufnahme, die in Eingriff miteinander sind. Beispielsweise steht ein Formschlussvorsprung der einen Trägerkomponente quer zum Verlauf einer Verbindungslinie oder einer Verbindungszone zwischen den Trägerkomponenten in eine Formschlussaufnahme der anderen Trägerkomponente vor.

Bevorzugt ist vorgesehen, dass mehrere Formschlussaufnahmen und Formschlussvorsprünge vorgesehen sind, die ineinander eingreifen. Eine zweckmäßige Maßnahme sieht vor, dass eine Eindringtiefe der Formschlussaufnahmen und Formschlussvorsprünge im Bereich einer die Trägerkomponenten verbindenden Umfangswand und/oder im Bereich einer Außenecke zwischen den Trägerkomponenten kleiner ist als in einem Bereich, an dem die Trägerkomponenten nicht durch eine Verbindungswand unmittelbar miteinander verbunden sind und/oder im Bereich einer Innenecke zwischen den Trägerkomponenten.

Die erste Trägerkomponente und die zweite Trägerkomponente können beispielsweise miteinander fluchten. Beispielsweise ist es möglich, dass die erste Trägerkomponente und die zweite Trägerkomponente insgesamt ein im Wesentlichen geradliniges Bauteil oder eine lineare oder im Wesentlichen geradlinige Konfiguration ausbilden, deren Verbindungsbereiche durch die Klammeranordnung miteinander verbunden sind. Beispielsweise können die jeweiligen Längsenden der Trägerkomponenten durch die Klammeranordnung miteinander verbunden sein.

Bevorzugt ist eine Konfiguration, bei der die Trägerkomponenten in einem Winkel, zum Beispiel einem sogenannten Gehrungswinkel, winkelig zueinander angeordnet sind. Beispielsweise schließen die Trägerkomponenten einen Winkel von ca. 10-120°, besonders bevorzugt etwa 90°, ein. Es ist möglich, dass die Trägerkomponenten, die zueinander winkelig sind, mit ihren abgeschrägten Seiten, z.B. den Gehrungswinkeln oder den in einem Gehrungswinkel ausgebildeten Flächen, aneinander anstoßen oder sich aneinander abstützen. Es ist aber auch möglich, dass ein Abstand, der zwischen den zueinander winkeligen Trägerkomponenten vorhanden ist, durch die Klammeranordnung sozusagen überbrückt ist.

Zweckmäßig ist es, wenn eines oder beide der Trägerkomponenten als Profilteil ausgestaltet ist oder sind. Das Profilteil hat beispielsweise eine rohrförmige Gestalt. Mithin kann also ein Außenumfang des Profilteils vollständig geschlossen sein. Es ist aber auch möglich, dass das Profilteil im Querschnitt beispielsweise L-förmig oder U-förmig ist.

Vorzugsweise bildet mindestens eine Trägerkomponente einen Bestandteil des Querträgers. Die andere Trägerkomponente kann ebenfalls einen Bestandteil des Querträgers bilden oder auch beispielsweise eines Seitenträgers zur Verbindung mit der Karosserie des Kraftfahrzeugs. Die jeweilige Trägerkomponente kann aber auch den Seitenträger oder Querträger als Ganzes darstellen oder bilden. Besonders bevorzugt ist eine Konfiguration, bei der an den jeweiligen Längsendbereichen des Querträgers, der eine erste Trägerkomponente darstellt, jeweils ein Seitenträger in erfindungsgemäßer Weise durch Klammerung mit dem Querträger verbunden ist. So ist beispielsweise eine U-förmige Konfiguration aus einer ersten Trägerkomponente als Querträger und zwei zweiten Trägerkomponenten als Seitenträger möglich. Die Seitenträger und der Querträger schließen beispielsweise jeweils etwa einen Winkel 80-110°, insbesondere ca. 90°, ein.

Besonders bei einer Trägerkomponente in Gestalt eines Profilteils, aber nicht nur bei diesen, ist die nachfolgend erläuterte Ausgestaltung leicht realisierbar und vorteilhaft.

Vorteilhaft ist vorgesehen, dass mindestens ein Seitenschenkel der Klammer mit Komponentenabschnitten, insbesondere Wandabschnitten mindestens einer der Trägerkomponenten verbunden ist, die einen Abstand zueinander aufweisen, wobei der mindestens eine Seitenschenkel eine Klammeraufnahme eines Komponentenabschnitts durchsetzt und in eine Klammeraufnahme des anderen Komponentenabschnitts eingreift oder mit dem anderen Komponentenabschnitt stoffschlüssig verbunden ist.

Es ist beispielsweise möglich, dass der Seitenschenkel beide Klammeraufnahmen durchgreift oder nur eine der Klammeraufnahmen durchgreift und in die andere Klammeraufnahme nur eindringt. Es ist auch möglich, dass der Seitenschenkel insbesondere mit seinem freien Endbereich mit dem anderen Komponentenabschnitt verschweißt, verklebt oder in anderer Weise stoffschlüssig verbunden ist.

Zweckmäßig ist es, wenn mindestens ein Seitenschenkel der Klammer in Klammeraufnahmen, Wandabschnitten oder sonstigen Abschnitten einer Trägerkomponente eingreift, die einen Abstand zueinander haben. Beispielsweise sind die Klammeraufnahmen an zueinander parallelen Wänden oder Wandabschnitten vorgesehen. Der Seitenschenkel der Klammer erstreckt sich zwischen diesen Wänden oder Wandabschnitten. Der Seitenschenkel wirkt vorteilhaft im Sinne einer Verstärkung oder Versteifung der Wandabschnitte der Trägerkomponente relativ zueinander.

Beispielsweise ist es möglich, dass die Abschnitte oder Wandabschnitte der Trägerkomponente durch mindestens einen Seitenwandabschnitt der Trägerkomponente miteinander verbunden sind. Der Seitenwandabschnitt und die einander gegenüberliegenden, von der Klammer durchgriffenen Wandabschnitte sind beispielsweise im Querschnitt U-förmig oder Bestandteile eines an seinem Außenumfang geschlossenen Profils.

Bei der Klammer ist es vorteilhaft, wenn sie zumindest teilweise eine plattenartige Gestalt hat. Zweckmäßig ist es, wenn der Grundschenkel und/oder ein Seitenschenkel oder beide Seitenschenkel oder insgesamt die Klammer plattenartig ist.

Zweckmäßigerweise ist vorgesehen, dass eine Stärke oder Querbreite eines Klammerschenkels deutlich kleiner, insbesondere mindestens fünfmal, vorzugsweise mindestens siebenmal, insbesondere mindestens zehnmal kleiner als ein Abstand zwischen den Klammerschenkeln der Klammer ist.

Eine sich quer zu dem Abstand zwischen den Seitenschenkeln erstreckende Breite der Klammer insgesamt oder des Grundschenkels und/oder mindestens eines Seitenschenkels entspricht zweckmäßigerweise etwa einer Querbreite mindestens einer Trägerkomponente, vorzugsweise beider Trägerkomponenten.

Bevorzugt ist es, wenn die mindestens eine Klammer gegen ein Ausziehen aus der jeweiligen ersten und/oder zweiten Trägerkomponente durch eine Sicherungsanordnung gesichert ist. Die Sicherungsanordnung wirkt also einem Ausziehen aus den Klammeraufnahmen entgegen der Steckrichtung, in welcher die Klammer in die Trägerkomponenten eingesteckt ist.

Die Klammer ist vorzugsweise entlang einer geradlinigen Steckachse oder Steckrichtung in die Trägerkomponenten eingesteckt.

Die Sicherungsanordnung umfasst beispielsweise eine Umkantung oder einen schräg oder quer zu der Steckrichtung umgebogenen oder umgekanteten oder in sonstiger Weise umgeformten Stützabschnitt eines Seitenschenkels der Klammer. Es ist z.B. möglich, dass der Seitenschenkel an seinem freien, vor die Klammeraufnahme vorstehenden Bereich eine Prägung aufweist, sodass er nicht mehr aus der Klammeraufnahme entgegen der Steckrichtung bewegbar ist.

Bevorzugt ist eine Konfiguration, bei der beide Seitenschenkel eine derartige Umkantung oder einen umgebogenen oder schräggestellten Stützabschnitt oder eine sonstige Umformung umfassen. Diese schräggestellten Stützabschnitte können zueinander hin oder voneinander weg verlaufen oder parallel zueinander schräg stehen.

Vorteilhaft ist vorgesehen, dass freie Endbereiche beider Seitenschenkel der Klammer und der Grundschenkel an einander entgegengesetzten Seiten der Trägerkomponenten angeordnet sind, beispielsweise einer Oberseite und einer Unterseite oder einer Vorderseite und einer Rückseite, wobei an der einen Seite der Grundschenkel oder Stützabschnitte, insbesondere schräg verlaufende Stützabschnitte, der Seitenschenkel in die Klammeraufnahmen der Trägerkomponenten eindringen und an den Trägerkomponenten abgestützt sind, während an der entgegengesetzten Seite der Trägerkomponenten die freien Endbereiche der Seitenschenkel angeordnet sind. Dort, an der entgegengesetzten Seite der Trägerkomponenten, bilden die freien Seitenschenkel beispielsweise Stützabschnitte aus und/oder stehen die freien Seitenschenkel vor diese entgegengesetzte Seite vor. Diese Stützabschnitte sind beispielsweise dadurch gebildet, dass sie eine quer zur Steckrichtung wirkende Umformung aufweisen und/oder mit einem der nachfolgend erläuterten Sicherungselemente oder Verbindungselemente sind.

Die Stützabschnitte oder umgeformten Abschnitte an den freien Endbereichen der Klammerschenkel können sich unmittelbar an einer jeweiligen Trägerkomponente abstützen, beispielweise an einer Seitenwand der Trägerkomponente. Es ist auch möglich, dass sich derartige Stützabschnitte an dem später noch erläuterten Sicherungselement abstützen.

Beispielsweise sind die umgeformten Stützabschnitte in der Art von Biegelaschen ausgestaltet.

Ein Stützabschnitt kann aber auch als eine Verschränkung ausgestaltet sein, d.h. dass beispielsweise ein Vorsprung eines Seitenschenkels eine Durchtrittsöffnung oder Klammeraufnahme durchdringt und einen quer zur Steckrichtung durch die Durchtrittsöffnung oder Klammeröffnung umgebogenen oder umgekanteten Abschnitt aufweist, der parallel zur Steckrichtung oder etwa parallel zur Steckrichtung verläuft. So kann die Durchtrittsöffnung oder Klammeraufnahme beispielsweise schlitzförmig sein, wobei ein Abschnitt des Vorsprungs des Seitenschenkels mit der Durchtrittsöffnung fluchtet, während ein anderer Abschnitt des Vorsprungs des Seitenschenkels quer zu der Durchtrittsöffnung oder Klammeraufnahme zur Seite hin orientiert ist, so dass der Seitenschenkel nicht mehr entgegen der Steckrichtung aus der Durchtrittsöffnung oder Klammeraufnahme heraus gelangen kann.

Der umgebogene oder schräg stehende Stützabschnitt des Seitenschenkels der Klammer und der Grundschenkel der Klammer sind zweckmäßigerweise an einander entgegengesetzten Seiten der Trägerkomponenten, mit der die Klammer in Eingriff ist, vorgesehen. Beispielsweise stützen sich der Grundschenkel einerseits und die Seitenschenkel andererseits an einer Oberseite und einer Unterseite oder einer Vorderseite und einer Rückseite der Trägerkomponente ab.

Es ist alternativ oder ergänzend aber auch möglich, dass die Sicherungsanordnung mindestens eine Schweißverbindung zwischen dem Seitenschenkel und derjenigen Trägerkomponente, mit welcher der Seitenschenkel in Eingriff ist, umfasst.

Vorteilhaft ist es, wenn die Sicherungsanordnung mindestens ein Sicherungselement umfasst. Das Sicherungselement ist mit dem Seitenschenkel formschlüssig und/oder stoffschlüssig verbunden, beispielsweise verklebt, verschweißt oder dergleichen.

Weiterhin ist es vorteilhaft, wenn das Sicherungselement von dem Seitenschenkel durchdrungen ist. Beispielsweise durchdringt der Seitenschenkel das Sicherungselement und ist an einer von dem Grundschenkel abgewandten Seite zusätzlich noch umgebogen, umgekantet oder dergleichen, sodass an dieser Stelle ein Formschluss gegeben ist. Ein freier Endbereich des Seitenschenkels, der beispielsweise durch einen Schlitz oder eine sonstige Durchtrittsöffnung des Sicherungselements hindurch tritt, kann beispielsweise quer zu der Steckrichtung, insbesondere S-förmig oder schrägverlaufend, umgebogen sein. Allerdings kann der das Sicherungselement durchdringendes Seitenschenkel zusätzlich noch mit dem Sicherungselement stoffschlüssig, beispielsweise durch eine Verschweißung, verbunden sein.

So kann beispielsweise eine Anordnung gegeben sein, bei der der Seitenschenkel eine Klammeraufnahme der Trägerkomponente und eine Durchtrittsöffnung des Sicherungselements durchdringt und der vor das Sicherungselement vorstehende Stützabschnitt durch eine Umkantung oder eine Schrägstellung oder eine sonstige Verformung, beispielsweise auch eine Prägung, daran gehindert werden, dass er entgegen der Steckrichtung wieder aus den vorgenannten Öffnungen, der Durchtrittsöffnung und der Klammeraufnahme, heraus gelangt.

Zweckmäßig ist es, wenn das Sicherungselement sich an der Trägerkomponente abstützt, beispielsweise flächig oder zumindest partiell oder punktuell, mit der der Seitenschenkel in Eingriff ist.

Eine Ausgestaltung des Sicherungselements kann vorsehen, dass es beispielsweise als Platte ausgestaltet ist oder plattenförmig ist. Gerade eine Platte eignet sich zu einer flächigen Anlage an der Trägerkomponente oder den Trägerkomponenten. Eine Klammer oder ein Klammerschenkel weist beispielsweise eine Schmalseite auf, die quer zum Grundschenkel der Klammer verläuft.

Das Sicherungselement kann also beispielsweise ein Widerlager bilden, das eine Bewegung der Klammer entgegen der Steckrichtung verhindert. Der durch das Sicherungselement gesicherte Seitenschenkel der Klammer kann sich also fester und/oder flächiger an der Trägerkomponente abstützen, die von ihm durchdrungen ist.

Das Sicherungselement oder ein anderes Verbindungselement kann aber auch noch zu einem anderen Zweck dienen. Zweckmäßigerweise sind die Seitenschenkel durch ein Verbindungselement im Abstand zu dem Grundschenkel miteinander verbunden, das entgegen einer Kraft der Seitenschenkel voneinander weg wirkt. Das Verbindungselement ist von den Trägerkomponenten separat.

Zum Beispiel kann das Verbindungselement in der Art einer Spange oder eines Ringes ausgestaltet sein, die oder der die beiden Seitenschenkel zusammenhält.

Es ist ferner möglich, dass das Verbindungselement von den Seitenschenkeln an Durchtrittsöffnungen durchdrungen ist und die Seitenschenkel an einer von dem Grundschenkel abgewandten Seite umgeformt, beispielsweise umgebogen, umgekantet, verprägt oder dergleichen anderweitig umgeformt sind. Somit sind die Seitenschenkel an einer Lösebewegung aus der Durchtrittsöffnung heraus gehindert. Die Umformung quer oder schräg zu einer Steckrichtung, entlang derer ein jeweiliger Seitenschenkel das Verbindungselement durchdringt, wirkt als Blockierung oder Verschiebesicherung des Seitenschenkels aus dem Verbindungselement heraus entgegen der Steckrichtung.

Weiterhin ist es zweckmäßig, wenn das Verbindungselement plattenartig ist oder durch eine Platte gebildet ist.

Zweckmäßigerweise umfasst die Klammeranordnung nicht nur eine, sondern beispielsweise zwei oder weitere Klammern. Diese Klammern können beispielsweise an derselben Seite der Trägerkomponente nebeneinander, beispielsweise in einer Reihenrichtung nebeneinander, angeordnet sein. Die Grundschenkel der Klammer kommen also beispielsweise nebeneinander zu liegen.

Alternativ oder ergänzend ist folgendes möglich:
Eine in der Zeichnung dargestellte Ausführungsform sieht vor, dass zwei Klammern von einander entgegengesetzten Seiten her in die Trägerkomponente eingreifen.

Eine Klammer kann das Sicherungselement für die andere Klammer bilden. Die Grundschenkel beider Klammern tragen dazu bei, die Verbindung zwischen den Trägerkomponenten zu fixieren.

Es ist möglich, dass die Seitenschenkel der Klammern stirnseitig aneinander anstoßen. Die Seitenschenkel können aber auch mit Flächen, die sich quer zur Steckrichtung der Klammer in die Trägerkomponenten hinein erstrecken, aneinander zu liegen kommen. In diesem Bereich kann auch eine Verspannung oder eine stoffschlüssige Verbindung vorteilhaft sein.

Die voneinander entgegengesetzten Seiten her in die Trägerkomponenten eingreifenden Klammern sind vorzugsweise miteinander verbunden, beispielsweise miteinander verschweißt, verklebt oder dergleichen. Alternativ oder ergänzend wäre aber auch eine Verschraubung der Seitenschenkel miteinander oder dergleichen möglich. Eine Verschraubung ist beispielweise dann ohne weiteres realisierbar, wenn die Seitenschenkel mit ihren Seitenflächen, also nicht mit ihren Stirnseiten, flächig aneinander zu liegen kommen.

Die freien Endbereiche der Seitenschenkel der von einander entgegengesetzten Seiten her in die Trägerkomponenten eingreifenden Klammern sind beispielsweise in einem Hohlraum oder Zwischenraum der jeweiligen Trägerkomponente angeordnet. So ist zum Beispiel möglich, dass jede Klammer mit ihrem Grundschenkel an der Außenseite der Trägerkomponente anliegt oder jedenfalls im Bereich der Außenseite angeordnet ist, während die Seitenschenkel in einen Hohlraum oder Zwischenraum der Trägerkomponente eingreifen.

Es ist aber auch möglich, dass die voneinander entgegengesetzten Seiten her in die Trägerkomponenten eingreifenden Klammern nicht miteinander verbunden sind. Insbesondere ist es vorteilhaft, wenn mindestens eine, zweckmäßigerweise beide, der insbesondere von einander entgegengesetzten Seiten her in die Trägerkomponenten eingreifenden Klammern jeweils individuell gegen ein Ausziehen aus der Klammeraufnahme gesichert ist, beispielsweise durch eine Verschränkung oder sonstige Verformung eines Klammerschenkels.

Weiterhin ist vorteilhaft möglich, dass die voneinander entgegengesetzten Seiten her in die Trägerkomponenten eingreifenden Klammern in voneinander separate Klammeraufnahmen eingreifen. Mithin ist also jede Klammer in Klammeraufnahmen aufgenommen, die mit den Klammeraufnahmen für die andere Klammer zweckmäßigerweise nicht kommunizieren, insbesondere zu diesen beabstandet sind. Beispielsweise sind Klammeraufnahme-Paare an jeder Trägerkomponente vorgesehen. Die Klammeraufnahmen der Klammeraufnahme-Paare sind vorzugweise konturgleich und/oder unmittelbar nebeneinander angeordnet. Die Klammeraufnahme-Paare können miteinander kommunizieren, das heißt dass beispielsweise ein Durchgang zwischen den Klammeraufnahmen vorgesehen ist. In den Durchgang hinein passen zweckmäßigerweise keine Seitenschenkel einer jeweiligen Klammer. Der Durchgang ist beispielsweise schmaler als eine Querbreite eines Seitenschenkels einer Klammer.

Zweckmäßigerweise ist vorgesehen, dass die freien Endbereiche der einen Klammer zu der Seite vor die Trägerkomponenten vorstehen, an der der Grundschenkel der andere Klammer angeordnet ist.

Die voneinander entgegengesetzten Seiten her in die Trägerkomponenten eingreifenden Klammern sind vorzugsweise gleichartig, insbesondere geometrisch gleichartig und/oder aus demselben Material.

An dieser Stelle sei erwähnt, dass es grundsätzlich vorteilhaft ist, wenn identische Klammern zur Verbindung der Trägerkomponenten verwendet werden. An einem Verbindungsabschnitt, wo eine mechanisch besonders belastbare Verbindung notwendig ist, können beispielsweise mehr Klammern verwendet werden als an einem weniger belasteten Verbindungsabschnitt zwischen den Trägerkomponenten.

Bevorzugt ist es, wenn ein Klammerschenkel in einer Klammeraufnahme an einander entgegengesetzten Seiten abgestützt ist. Beispielsweise stützt sich der Klammerschenkel an Widerlagerflächen oder Innenflächen der Klammeraufnahme ab, die sich quer oder parallel zum Grundschenkel der Klammer erstrecken.

Es ist auch möglich, dass zwei Klammerschenkel zweier unterschiedlicher Klammern in ein und derselben Klammeraufnahme angeordnet sind und sich aneinander abstützen sowie an einander entgegengesetzten Seiten in der Klammeraufnahme abgestützt sind. Die Klammerschenkel liegen beispielsweise aufeinander und stützen sich in der Richtung, in welcher sie aufeinander aufliegen, an Innenseiten der Klammeraufnahme ab. Die Klammerschenkel füllen also sozusagen gemeinsam die Klammeraufnahme aus.

Ein bevorzugtes Konzept sieht vor, dass eine Paarung von Trägerkomponenten durch mindestens zwei Klammern miteinander verbunden sind. Die mindestens zwei Klammern können von derselben Seite oder voneinander entgegengesetzten Seiten her in die Trägerkomponenten eingesteckt sein. Beispielsweise überspannen die mindestens zwei Klammern eine Kontaktfläche oder einen insbesondere eine Gehrungsfläche umfassenden Kontaktbereich, in welchem die Trägerkomponenten aneinander anliegen. Es können auch mehrere Klammerpaare, d.h. Paarungen mit jeweils zwei Klammern, die insbesondere voneinander entgegenentgegengesetzten Seiten her in die Trägerkomponenten eingesteckt sind, in Abständen zueinander vorgesehen sein.

Wenn eine Paarung von Trägerkomponenten durch mindestens zwei Klammern miteinander verbunden sind, kann eine der Klammern mechanisch stärker als die andere Klammer sein. Vorzugsweise ist vorgesehen, dass eine in einem Inneneckbereich vorgesehene Klammer mechanisch weniger belastbar ausgelegt ist als eine an einem Außeneckbereich vorgesehene Klammer oder umgekehrt. Somit können die Klammern sozusagen belastungsspezifisch ausgelegt sein.

Die mindestens zwei Klammern sind vorzugsweise in einem Abstand zueinander angeordnet. Die Klammern berühren sich aufgrund des Abstands nicht. Jede Klammer verbindet die Trägerkomponenten miteinander. Die Grundschenkel der Klammern können beispielsweise parallel nebeneinander verlaufen.

Die mindestens eine Klammer ist erfindungsgemäß in der Seitenansicht U-förmig.

Zweckmäßigerweise ist zwischen einem Seitenschenkel der mindestens einen Klammer und der Klammeraufnahme, in die der Seitenschenkel eindringt oder die der Seitenschenkel durchdringt, eine als Einführhilfe oder als Spannfläche ausgestaltete Schrägfläche vorgesehen.

Die Funktion der Einführhilfe unterstützt das Einstecken der Klammer in die Klammeraufnahme.

Die Spannfläche wirkt im Sinne einer Verspannung der beiden Trägerkomponenten zueinander hin oder ist derart ausgestaltet. Die Spannfläche oder Schrägfläche kann beispielsweise durch eine entsprechende Schrägneigung oder Winkelstellung des Seitenschenkels gebildet oder bereitgestellt sein.

Es ist auch möglich, dass beispielsweise an der Klammeraufnahme eine Schrägfläche vorgesehen ist, die im Sinne einer Verspannung oder als Einführhilfe wirkt.

Vorteilhaft ist es, wenn die mindestens eine Klammer und/oder mindestens eine mit der Klammer zusammenwirkende Klammeraufnahme eine Schrägflächenanordnung aufweist, die bei einer Betätigung oder Belastung der Klammer in die Steckrichtung in die Trägerkomponenten hinein im Sinne einer Verspannung der beiden Trägerkomponenten durch die mindestens eine Klammer zueinander hin wirkt.

Beispielsweise haben die Seitenschenkel im Verbindungsbereich zu dem Grundschenkel eine Schrägneigung in einem Sinne voneinander weg und/oder einen kleineren Abstand als an ihren freien Endbereichen zueinander. Wenn dieser engere oder schräge Stützabschnitt der Seitenschenkel in die Klammeraufnahmen eindringt, sorgt er für eine Kraft der Trägerkomponenten zueinander hin. Die freien Endbereiche der Seitenschenkel wiederum können sich an der zu dem Grundschenkel entgegengesetzten Seiten der Trägerkomponenten abstützen und somit die Klammer an einer Bewegung außer Eingriff mit den Trägerkomponenten hindern. Dadurch bleibt die Kraftbeaufschlagung der Klammer in einem Sinne der Trägerkomponenten zueinander hin erhalten.

Unterstützt wird diese Maßnahme vorzugsweise noch durch das vorgenannte Sicherungselement und/oder Verbindungselement. Dieses sorgt vorzugsweise noch für eine besonders günstige Abstützung an mindestens einer der Trägerkomponenten, beispielsweise eine flächige Anlage. Weiterhin kann das Verbindungselement oder Sicherungselement dazu beitragen, dass die Seitenschenkel an einer Bewegung voneinander weg gehindert sind, was auch zum Aufrechterhalten der vorgenannten Spannung der Trägerkomponenten durch die mindestens eine Klammer zueinander hin beiträgt.

Vorteilhaft ist es, wenn zwischen dem Grundschenkel der mindestens einen Klammer und mindestens einer Trägerkomponente, vorzugsweise beiden Trägerkomponenten, ein Abstand vorhanden ist.

Dieser Abstand kann ein Bewegungsspiel der Klammer in die Steckrichtung zulassen, so dass beispielsweise die vorgenannte Verspannung der Trägerkomponenten zueinander hin durch die Beweglichkeit der Klammer entlang der Steckrichtung in einem vorbestimmten Maß nachgebend und/oder nachstellbar und/oder einstellbar ist.

Ferner kann der Abstand zwischen dem Grundschenkel der Klammer und den Trägerkomponenten auch dazu dienen, dass die Klammer in einem die Verspannung zwischen den Trägerkomponenten ausreichend sicherstellenden Maße in die Trägerkomponenten hinein gesteckt werden kann.

Ein Abstand zwischen dem Grundschenkel der Klammer und den Trägerkomponenten kann für das Stellspiel oder für den Stellweg der Klammer im Zusammenhang mit den vorgenannten Schrägflächen vorteilhaft vorgesehen sein.

Die Seitenschenkel stehen beispielsweise in einem Winkel von etwa 90° vom Grundschenkel ab. Es ist aber auch möglich, dass die Seitenschenkel in anderen Winkeln von dem Grundschenkel abstehen.

Vorzugsweise ist vorgesehen, dass die mindestens eine Klammer ausschließlich durch Umformungen mit den Trägerkomponenten verbunden ist. Eine Verschweißung zwischen der Klammer und einer Trägerkomponente ist in diesem Fall nicht vorhanden. Wenn eine Verschweißung oder ein sonstiger Stoffschluss vorhanden ist, ist dieser zweckmäßigerweise nur zwischen der Klammer und dem Verbindungselement oder Sicherungselement vorgesehen. Somit werden die Trägerkomponenten, beispielsweise Profilrohre oder Profilkörper, nicht durch einen Stoffschluss belastet.

Der Lastenträger oder die Anhängekupplung kann lösbar an der Halterung befestigbar sein. Beispielsweise ist eine Steckverbindung vorgesehen. Eine Steckrichtung oder Montagerichtung zum Anstecken oder Einstecken des Lastenträgers oder der Anhängekupplung an oder in die Halterung kann beispielsweise vertikal verlaufen. Aber auch eine horizontale Montage, insbesondere im Falle eines Lastenträgers, ist zweckmäßig.

Bei der Halterung handelt es sich beispielsweise um eine Hülse oder ein Aufnahmerohr für eine Anhängekupplung oder ein Steckende eines Lastenträgers. Es ist aber auch möglich, dass die Halterung beispielsweise ein Schwenklager und/oder ein Schiebelager für einen Kupplungsarm oder eine Aufnahme für einen Lastenträger bildet.

Bevorzugt handelt es sich bei der Halterung um ein Blechbauteil, beispielsweise eine Hülse aus Blech.

In der Halterung ist zweckmäßigerweise eine Formschluss-Aufnahme zur formschlüssigen Verriegelung und/oder zum formschlüssigen Halt der Anhängekupplung oder des Lastenträgers an der Halterung vorgesehen.

Nachfolgend werden Ausführungsbeispiele der Erfindung anhand der Zeichnung erläutert. Es zeigen:

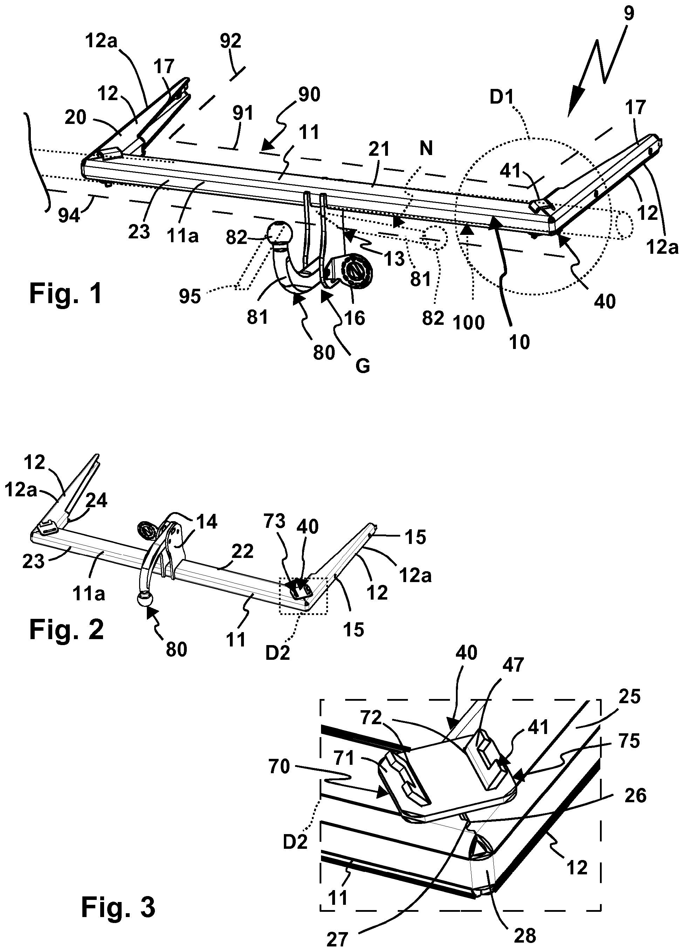

- Figur 1: eine perspektivische Schrägansicht einer ersten Trägeranordnung, die in
- Figur 2: von schräg unten dargestellt ist,
- Figur 3: einen Ausschnitt D2 der Trägeranordnung gemäß Figur 2,
- Figur 4: die Ansicht gemäß Figur 3 frontal von oben,
- Figur 5: einen Querschnitt durch die Anordnung gemäß Figur 4 entlang einer Schnittlinie A-A,
- Figur 6: eine Detailansicht einer zweiten Trägeranordnung als einer Variante der ersten Trägeranordnung, entsprechend einem Ausschnitt D1 in Figur 1 von unten,
- Figur 7: einen Querschnitt durch die Anordnung gemäß Figur 6 etwa entlang einer Schnittlinie B-B,
- Figur 8: eine Detailansicht einer dritten Trägeranordnung als einer Variante der ersten Trägeranordnung, entsprechend einem Ausschnitt D1 in Figur 1 von unten,
- Figur 9: einen Querschnitt durch die Anordnung gemäß Figur 8 etwa entlang einer Schnittlinie C-C,
- Figur 10: einen Querschnitt durch die Anordnung gemäß Figur 8 etwa entlang einer Schnittlinie D-D,

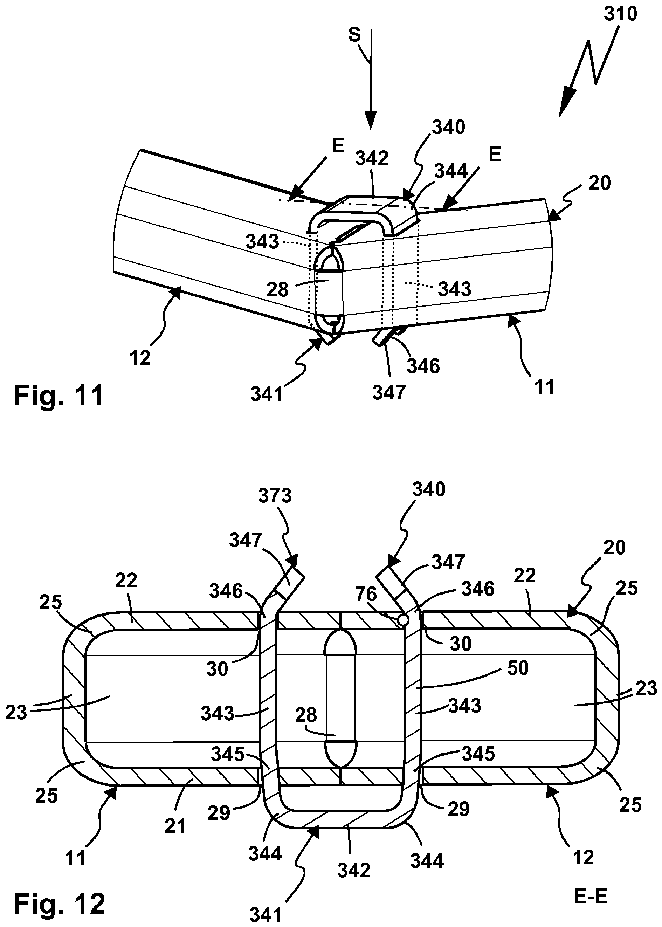

- Figur 11: eine Detailansicht einer dritten Trägeranordnung als einer Variante der ersten Trägeranordnung, entsprechend einem Ausschnitt D1 in Figur 1 von oben,
- Figur 12: einen Querschnitt durch die Anordnung gemäß Figur 11 etwa entlang einer Schnittlinie E-E,
- Figur 13: eine Detailansicht einer vierten Trägeranordnung als einer Variante der ersten Trägeranordnung, entsprechend einem Ausschnitt D1 in Figur 1 von oben,
- Figur 14: einen Querschnitt durch die Anordnung gemäß Figur 13 etwa entlang einer Schnittlinie F-F,
- Figur 15: eine Detailansicht einer fünften Trägeranordnung als einer Variante der ersten Trägeranordnung, entsprechend einem Ausschnitt D1 in Figur 1 von oben,
- Figur 16: einen Querschnitt durch die Anordnung gemäß Figur 15 etwa entlang einer Schnittlinie G-G,
- Figur 17: eine Detailansicht einer sechsten Trägeranordnung als einer Variante der ersten Trägeranordnung, entsprechend einem Ausschnitt D1 in Figur 1 von oben,
- Figur 18: einen Querschnitt durch die Anordnung gemäß Figur 17, etwa entlang einer Schnittlinie H-H,
- Figur 19: eine Detailansicht einer siebten Trägeranordnung als Variante der ersten Trägeranordnung von schräg oben, die in
- Figur 20: in einem Schnitt dargestellt ist,
- Figur 21: eine Draufsicht auf eine Trägeranordnung mit Trägerkomponenten, die durch Klammer-Paare miteinander verbunden sind,
- Figur 22: eine Detailvergrößerung etwa entsprechend einem Ausschnitt D5 in Figur 21,
- Figur 23: eine Seitenansicht auf die Verbindung von Trägerkomponenten entsprechend Figur 22,
- Figur 24: einen Schnitt durch die Trägeranordnung gemäß Figur 21 entlang einer Schnittlinie I-I, und
- Figur 25: eine Klammer der Klammeranordnung zur Verbindung der Trägerkomponenten gemäß Figur 21.

In der nachfolgenden Beschreibung der Ausführungsbeispiele sind teilweise gleiche oder gleichartige Komponenten vorhanden, die üblicherweise mit denselben Bezugsziffern versehen sind, somit also nur einmal erläutert werden. Insoweit Komponenten oder deren Bestandteile gleichartig sind, jedoch Unterschiede aufweisen, sind Bezugsziffern verwendet, die sich um jeweils 100 voneinander unterscheiden.

Eine Anhängekupplung 9 weist eine Trägeranordnung 10 mit einem Querträger 11a auf, der sich im an einem Kraftfahrzeug 90 montierten Zustand entlang eines Hecks 91 des Kraftfahrzeugs 90 erstreckt. Der Querträger 11a ist beispielsweise zwischen einer Karosserie 92 des Kraftfahrzeugs 90 und einem Stoßfänger 94 aufgenommen.

Von dem Querträger 11a abstehende Seitenträger 12a erstrecken sich im Wesentlichen in Fahrzeuglängsrichtung des Kraftfahrzeugs 90. Beispielsweise stehen die Seitenträger 12a etwa rechtwinkelig oder in einem Winkel von 80-110° von dem Querträger 11a ab.

Der Querträger 11a weist einen Mittelabschnitt auf, an welchem eine Halterung 13 gehalten ist, die einen Kupplungsarm 80 trägt. Der Kupplungsarm 80 ist fest an der Halterung 13 befestigt. Es ist aber auch eine schwenkbare oder verschiebliche Lagerung von Kupplungsarm und Halterung ohne weiteres möglich. Beispielweise könnte an der Halterung 13 ein Schwenklager für den Kupplungsarm 80 vorgesehen sein.

Beispielsweise könnte der Kupplungsarm 80 zwischen einer nach hinten vor das Heck 91 vorstehenden Gebrauchsstellung G, in welcher er zum Anhängen eines schematisch dargestellten Anhängers 95 oder Tragen eines Lastenträgers (nicht dargestellt) positioniert ist, und einer näher zum Heck 91 hin verstellten Nichtgebrauchsstellung N, die nicht zum Tragen eines Lastenträgers oder Anhängen eines Anhängers geeignet ist, verstellt werden. In der Nichtgebrauchstellung N ist der Kupplungsarm 80 beispielsweise unterhalb des Stoßfängers 94 oder zweckmäßigerweise zwischen dem Stoßfänger 94 und dem Heck 91 des Kraftfahrzeugs 90 positioniert. Zweckmäßigerweise liegt in der Nichtgebrauchstellung N ein Armabschnitt 81 des Kupplungsarms 80 am Querträger 11a an oder verläuft im Wesentlichen parallel zu diesem oder längs des Querträgers 11a.

Möglich wäre aber auch eine lösbare Verbindung zwischen Kupplungsarm und Halter, beispielsweise anhand einer Steckverbindung. Im Falle einer beweglichen Lagerung oder einer Steckverbindung ist eine Fixiereinrichtung oder Verriegelungseinrichtung zum Fixieren oder Verriegeln des Kupplungsarms am Halter bei einer erfindungsgemäßen Anhängekupplung vorteilhaft. Für einen steckbaren Kupplungsarm kann beispielsweise eine Hülse oder ein Rohr als Halterung 13 vorgesehen sein oder von der Halterung 13 gehalten werden.

Der Kupplungsarm 80 hat an einem freien Endbereich des Armabschnitts 81 einen Kuppelkörper 82, beispielsweise eine Kupplungskugel oder ein sonstiges Kupplungsstück, das zur Befestigung eines Anhängers oder Lastenträgers geeignet ist. Dort könnte aber auch ein Steckvorsprung oder eine Steckaufnahme, insbesondere für einen Lastenträger vorgesehen sein. Der andere Endbereich des Armabschnitts 81 ist mit dem Halter 13 verbunden.

Bei der Anhängekupplung 9 sind nur jeweils ein einziger Halter und ein einziger Kupplungsarm vorgesehen. Dies soll allerdings nicht einschränkend verstanden werden. Bei einer erfindungsgemäßen Anhängekupplung könnten durchaus auch beispielsweise zwei Halter mit Kupplungsarmen vorgesehen sein, beispielsweise wenn sie zum Tragen eines Lastenträgers dient, der dann mit zwei Befestigungsarmen an den Kupplungsarmen befestigbar ist.

Die Halterung 13 umfasst Tragarme 14, die beispielsweise mit dem Querträger 11a verschweißt oder verschraubt sind. Auch die nachfolgend beschriebene Verbindung der Halterung 13 mit dem Querträger 11a mit beispielsweise einer Klammerung wäre ohne weiteres möglich, ist aber in der Zeichnung nicht dargestellt.

Der Kupplungsarm 80 ist beispielsweise zwischen den Tragarmen 14 sandwichartig gehalten. An einem der Tragarme 14 kann optional noch ein Steckdosenhalter 16 vorgesehen sein, an dem eine Anhängersteckdose zur Stromversorgung des in der Zeichnung nicht dargestellten Anhängers montierbar ist.

Die Seitenträger 12a haben mehrere Montageöffnungen 15, durch welche zum Beispiel Schrauben oder sonstige Befestigungselemente hindurch gesteckt und mit der Karosserie 92 verbunden werden können. Zu den freien Enden hin sind die Seitenträger 12a etwas schmäler auslaufend, haben also beispielsweise eine Verjüngung 17. Mithin ist also die Trägeranordnung 10 zweckmäßigerweise optimal an die Kontur des Hecks 91 angepasst.

Der Querträger 11a bildet im Sinne der nachfolgenden Beschreibung eine erste Trägerkomponente 11. Die Seitenträger 12a bilden im Sinne der nachfolgenden Beschreibung jeweils zweite Trägerkomponenten 12.

Die Trägerkomponenten 11, 12 sind jeweils als Profilteile 20 ausgeführt. Sie haben obere und untere Seitenwände 21, 22, die durch bezüglich der Karosserie 92 äußere Seitenwände 23 und bezüglich der Karosserie 92 innere Seitenwände 24 miteinander verbunden sind. Zwischen den Seitenwänden 21-24 verlaufen jeweils Übergangsabschnitte 25, die vorliegend bogenförmig oder gekrümmt sind. Zwar haben die Profilteile 20 beim Ausführungsbeispiel der Zeichnung eine flach-rechteckige Querschnittsgestalt, wobei dies nicht im Sinne einer Einschränkung zu verstehen ist. Vorteilhaft ist es jedoch, wenn bei einer Trägeranordnung ein geschlossenes Profil Verwendung findet oder beispielsweise ein im Querschnitt U-förmiges Profil, das beispielsweise nur die oberen und unteren Seitenwände 21, 22 wie eine der verbindenden Seitenwände 23 oder 24 aufweist. Selbst eine L-förmige Profil-Gestaltung wäre ohne weiteres möglich, um die nachfolgend erläuterte Klammerung von Trägerkomponenten zu ermöglichen.

Die Trägeranordnung 10 ist zweckmäßigerweise aus einem einzigen, durchgehenden Rohling 100 gefertigt, wobei dann im Übergangsbereich zwischen dem Querträger 11a und den Seitenträgern 12a jeweils Aussparungen in der Art von Gehrungsaussparungen, zum Beispiel dreieckförmige Ausschnitte, hergestellt werden, um die Seitenträger 12a zu dem Querträger 11a biegen zu können.

Die äußere Seitenwand 23 bleibt dabei vorzugsweise ganz oder zumindest im Wesentlichen stehen, sodass sich im Bereich der Gehrungsflächen 27 zwischen den Profilteilen 20 oder den Trägerkomponenten 11, 12 Verbindungsabschnitte 28 ausbilden. Die Verbindungsabschnitte 28 bilden sozusagen die Außenecken der Trägeranordnung 10. Aufgrund der Verbindungsabschnitte 28 sind die Trägerkomponenten 11, 12 zumindest partiell einstückig. An dieser Stelle sei aber auch eine beispielweise stoffschlüssige Verbindung zwischen den Trägerkomponenten 11, 12, insbesondere im Bereich der Außenecken der Trägeranordnung 10 und/oder der Gehrungsflächen 27, als eine weitere Option erwähnt.

Weiterhin ist es zweckmäßig, dass im Bereich der Gehrungsflächen 27 Formschlusskonturen 26 vorgesehen sind. Die Formschlusskonturen 26 umfassen beispielsweise einen Formschlussvorsprung 32 an der Trägerkomponente 12, der in eine Formschlussaufnahme 33 der anderen Trägerkomponente 11 eingreift. Neben der Formschlussaufnahme 33 erstreckt sich vorzugsweise ein Formschlussvorsprung 34, neben dem wiederum eine Aussparung 35 an der Trägerkomponente 11 im Bereich der Gehrungsflächen 27 vorhanden ist.

Die Aussparung 35 kann dazu dienen, dass ein Lack oder eine sonstige Beschichtung in einen Innenraum der Trägeranordnung oder aus dem Innenraum der Trägeranordnung heraus fließen kann. Weiterhin ist dadurch eine statische Überbestimmung vermieden, weil nur Teile der einander gegenüberliegenden Bereiche der Trägerkomponenten 11, 12 unmittelbar aneinander abgestützt sind, insbesondere in Eckbereichen vorgesehene Kontaktflächen.

Die Trägerkomponenten 11, 12 sind jeweils durch Klammeranordnungen 40 mit einer Klammer 41 verbunden. Eine Klammer 41 weist einen Grundschenkel 42 sowie Seitenschenkel 43 auf. Die Seitenschenkel 43 gehen mit Krümmungsabschnitten 44 in den Grundschenkel 42 über. Zwischen den Seitenschenkeln 43 und dem Grundschenkel 42 ist beispielsweise ein Winkel von etwa 90°, der durchaus auch 85° oder 95° sein kann, vorhanden.

Die Seitenschenkel 43 sind durch die Profilteile 20 entlang einer Steckrichtung S durchgesteckt, wobei sie Klammeraufnahmen 29 an der Seitenwand 21 sowie Klammeraufnahmen 30 an der Seitenwand 22 durchdringen.

Der Grundschenkel 42 verläuft zweckmäßigerweise neben der Seitenwand 21 und in einem Abstand 49 dazu.

Zwischen den Krümmungsabschnitten 44 und einem mittleren Abschnitt 50 der Seitenschenkel 43, der im Zwischenraum zwischen den Seitenwänden 21, 22 zu liegen kommt, befindet sich jeweils ein Schrägabschnitt 45. Die Schrägabschnitte 45 sind im Eingriff mit den Klammeraufnahmen 29. Die Schrägabschnitte 45 verlaufen schräg geneigt bezüglich der Steckrichtung S. Die Schrägabschnitte 45 sind ausgehend vom Grundschenkel 42 in einem Sinne voneinander weg schräg geneigt. Dies bewirkt bei einer Kraftbeaufschlagung der Klammer 41 in der Steckrichtung S, dass die Seitenschenkel 43 die Trägerkomponenten 11, 12 aufeinander zu mit kraftbeaufschlagen, also gegeneinander verspannen.

Die Klammer 41 ist gegen ein Ausziehen entgegen der Steckrichtung S durch eine Sicherungsanordnung 73 gesichert. Die Sicherungsanordnung 73 umfasst beispielsweise Stützabschnitte 47 der Seitenschenkel 43, die quer zu der Steckrichtung S voneinander weg geneigt sind. Somit kann die Klammer 41 nicht entgegen der Steckrichtung S aus den Klammeraufnahmen 29, 30 herausgezogen werden.

Die mittleren Abschnitte 50 gehen in die Stützabschnitte 47 mit Abwinkelungsabschnitten 46 über.

Die freien Endbereiche der Seitenschenkel 43 sind durch ein Verbindungselement 75 miteinander verbunden. Das Verbindungselement 75 bildet zugleich ein Sicherungselement 70, dass in Zusammenwirkung mit den Stützabschnitten 47 einem Ausziehen der Klammer 41 aus den Trägerkomponenten 11, 12 entgegenwirkt. Beispielsweise umfasst oder bildet das Verbindungselement 75 oder das Sicherungselement 70 eine Platte 71.

Zweckmäßigerweise stützt sich die Platte 71 flächig an den Seitenwänden 22 oder jedenfalls den Trägerkomponenten 11, 12 ab.

Die Seitenschenkel 43 durchdringen Durchtrittsöffnungen 72 des Sicherungselements 70 oder des Verbindungselements 75. Vorzugsweise befinden sich die Abwinkelungsabschnitte 46 im Bereich dieser Durchtrittsöffnungen 72, was zugleich dazu beiträgt, dass die Seitenschenkel 43 in den Durchtrittsöffnungen 72 fixiert sind. Zugleich wirken die Abwinkelungsabschnitte 46 ebenfalls im Sinne einer Verspannung oder jedenfalls Kraftbeaufschlagung in Richtung der Steckrichtung S. Dies kann zum einen dazu vorgesehen sein, die Klammer 41 bezüglich der Trägerkomponenten 11, 12 zu sichern. Zum andern kann die Kraftbeaufschlagung der Klammer 41 in der Steckrichtung S dazu beitragen, die Trägerkomponenten 11, 12 in Zusammenwirkung mit der Schrägflächenanordnung, die die Schrägabschnitte 45 mit den Klammeraufnahmen 29 bilden, miteinander zu verspannen.

Die vorgenannte Verbindung funktioniert vorteilhaft völlig ohne Schweißverbindung. Die Trägerkomponenten 11, 12 werden dann nicht durch Wärme oder sonstige bei einer Verschweißung auftretende Effekte beschädigt oder beeinträchtigt.

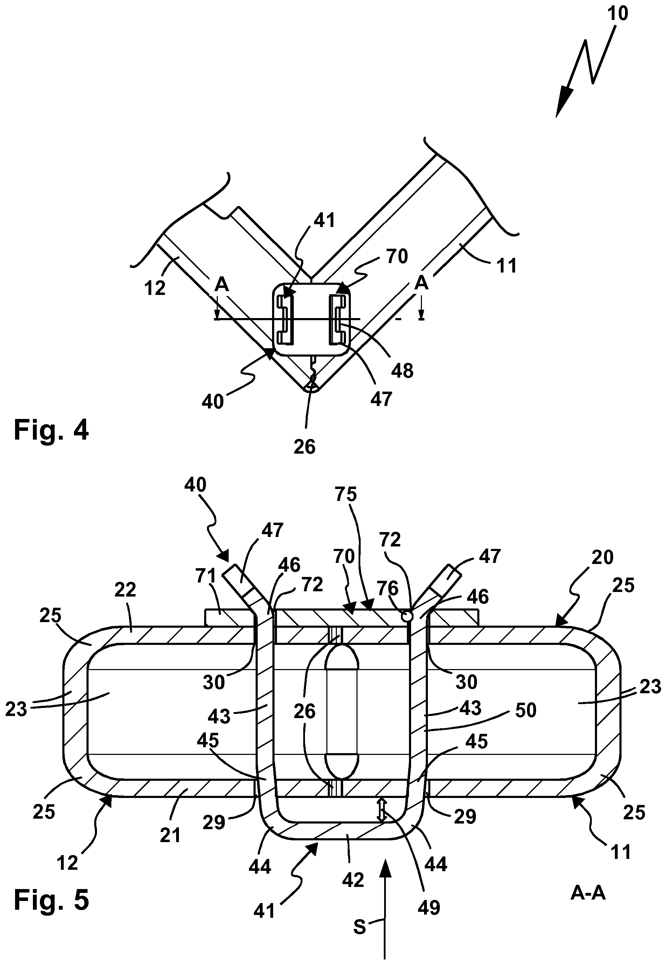

Vorteilhaft kann aber auch eine Verschweißung vorgesehen sein, beispielsweise eine Schweißverbindung 76 zwischen dem Sicherungselement 70 oder dem Verbindungselement 75 einerseits und andererseits den Seitenschenkeln 43. In Figur 5 ist das exemplarisch eingezeichnet.

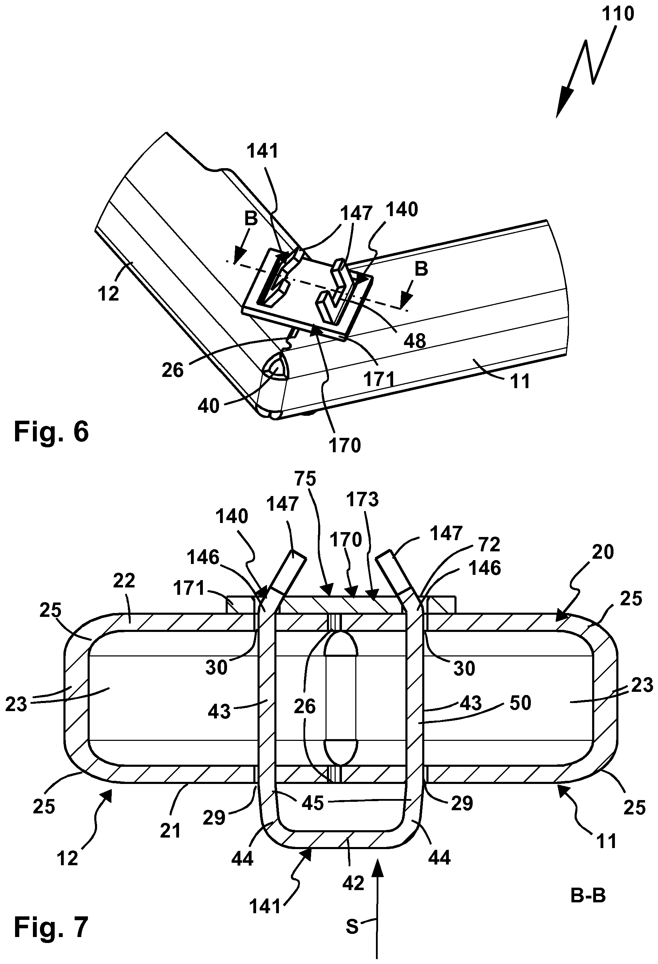

Eine Trägeranordnung 110 gemäß Figuren 6, 7 entspricht im Wesentlichen der bereits erläuterten Trägeranordnung 10, hat also beispielsweise die Halterung 13, die in der Zeichnung nicht sichtbar ist. Allerdings sind bei der Trägeranordnung 110 anstelle der Klammeranordnungen 40 etwas anders ausgestaltete Klammeranordnungen 140 zur Verbindung der Trägerkomponenten 11, 12 vorgesehen. Die Klammeranordnungen 140 weisen beispielsweise Klammern 141 auf, die zwar den Klammern 41 ähneln, jedoch gewisse Unterschiede aufweisen. Die Stützabschnitte 147 der Seitenschenkel 43 der Klammern 141 sind anders als beim 1. Ausführungsbeispiel an der von dem Grundschenkel 42 abgewandten Seite zueinander hin geneigt, weisen also zueinander hin geneigte Stützabschnitte 147 auf. Die mittleren Abschnitte 50 der Seitenschenkel 43 gehen mit Abwinkelungsabschnitten 146 in die Stützabschnitte 147 über. Die Abwinkelungsabschnitte 146 sind in Durchtrittsöffnungen 72 eines Sicherungselements 170 angeordnet, das im Wesentlichen dem Sicherungselement 70 entspricht. Allerdings hat das Sicherungselement 170, das insgesamt wiederum ein Verbindungselement 75 zur Verbindung der Seitenschenkel 43 darstellt, keine gerundeten Außeneckbereiche wie das Sicherungselement 70.

Man erkennt, dass auch bei zueinander hin geneigten Stützabschnitten 147 eine Verspannung der Klammer 141 in Richtung der Steckrichtung S möglich ist, wobei wiederum die Schrägabschnitte 45 in den Klammeraufnahmen 29 im Sinne einer Verspannung der Trägerkomponenten 11, 12 zueinander hin wirkt.

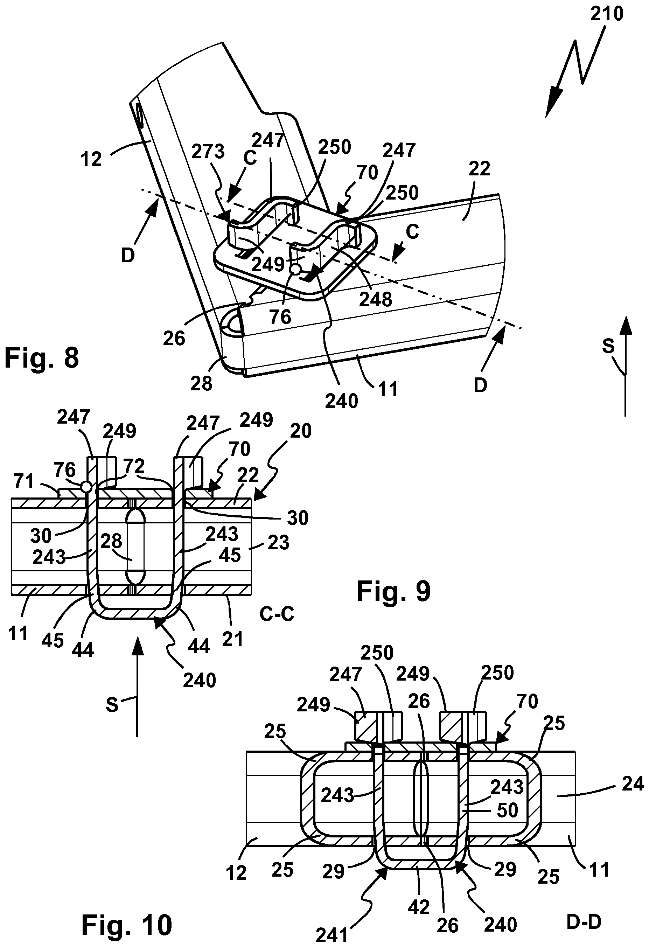

Bei dem in den Figuren 8-10 dargestellten Ausführungsbeispiel der Trägeranordnung 210 sind ebenfalls teilweise gleiche oder gleichartige Komponenten, beispielsweise die Halterung 13, vorhanden wie bei den vorher erläuterten Ausführungsbeispielen, d.h. bei den Trägeranordnungen 10, 110. Insoweit sind jedenfalls gleiche Bezugszeichen oder Bezugsziffern verwendet.

Eine Klammeranordnung 240 zur Verbindung der Trägerkomponenten 11, 12 hat jedoch eine etwas komplexere Ausgestaltung im Bereich von Stützabschnitten 247 einer jeweiligen Klammer 241.

Die Klammern 241 weisen im Bereich ihrer Seitenschenkel 243 wie bereits bei den vorigen Ausführungsbeispielen Schrägabschnitte 45 auf, die in Zusammenwirkung mit den Klammeraufnahmen 29 im Sinne einer Verspannung der Trägerkomponenten 11, 12 zueinander hin wirken, wenn die Klammern 241 in Richtung der Steckrichtung S kraftbeaufschlagt oder jedenfalls belastet sind. Zu einer derartigen Abstützung oder Kraftbeaufschlagung trägt die an der Unterseite der Trägeranordnung 210 vorgesehene und nachfolgend erläuterte Verspannung oder Abstützung in optimaler Weise bei.

Freie Endbereiche der Klammern 241 sind beispielsweise durch die Durchtrittsöffnungen 72 des Sicherungselements 70 hindurch gesteckt und an der von dem Grundschenkel 42 abgewandten Seite zu Stützabschnitten 247 geformt. Die Stützabschnitte 247 haben beispielsweise eine S-förmige Gestalt, bei der zwar ein mittlerer Abschnitt 248 mit den schlitzförmigen oder eine Längsgestalt aufweisenden Durchtrittsöffnungen 72 fluchtet, jedoch Stützabschnitte 249, 250 quer zur Längsrichtung der Durchtrittsöffnungen 72 verlaufen. Somit können die freien Endbereiche oder Stützabschnitte 247 nicht entgegen der Steckrichtung S aus dem Sicherungselement 70 heraus gelangen. Auch hier wiederum ist eine Verschweißung möglich, beispielsweise eine Schweißverbindung 76 zwischen den Stützabschnitten 247 und dem Sicherungselement 70. die Schweißverbindungen 76 können an beliebigen Stellen der Stützabschnitte 247 vorgesehen sein, was anhand der Figuren 8 und 9 exemplarisch angedeutet ist.

Das Ausführungsbeispiel der Trägeranordnung 310 gleicht im Wesentlichen dem Ausführungsbeispiel der Trägeranordnungen 10, 110, allerdings ohne ein zusätzliches Sicherungselement oder Verbindungselement zur Sicherung oder Verbindung von Seitenschenkeln 343 der Klammern 341 der bei ihr verwendeten Klammeranordnungen 340.

Die Trägerkomponenten 11, 12 der Trägeranordnung 310 sind durch die Klammeranordnungen 340 verbunden. Die Klammeranordnungen 340 umfassen Klammern 341, deren Grundschenkel 342 sich parallel zu den Seitenwänden 21 erstreckt und deren Seitenschenkel 343 durch die Klammeröffnungen 29, 30 durchgesteckt sind. Auch die Klammern 341 weisen Krümmungsabschnitte 344 entsprechend den Krümmungsabschnitten 44 auf, die in bezüglich der Steckrichtung S schräg verlaufende Schrägabschnitte 345 übergehen. Die Schrägabschnitte 345 sorgen für eine Verspannung der Trägerkomponenten 11, 12 in einem Sinne zueinander hin.

Die Seitenschenkel 343 sind jedoch nicht durch ein Verbindungselement 75 miteinander verbunden. Vielmehr sind ihre Abwinkelungsabschnitte 346 direkt in den Durchtrittsöffnungen oder Klammeraufnahmen 30 angeordnet. Dies wird dadurch erzielt, dass die Stützabschnitte 347 zueinander hin umgekantete Umformabschnitte darstellen, so dass sie unmittelbar eine Sicherungsanordnung 373 bilden. Die Sicherungsanordnung 373 verhindert ein Ausziehen der Klammern 341 aus den Trägerkomponenten 11, 12 entgegen der Steckrichtung S.

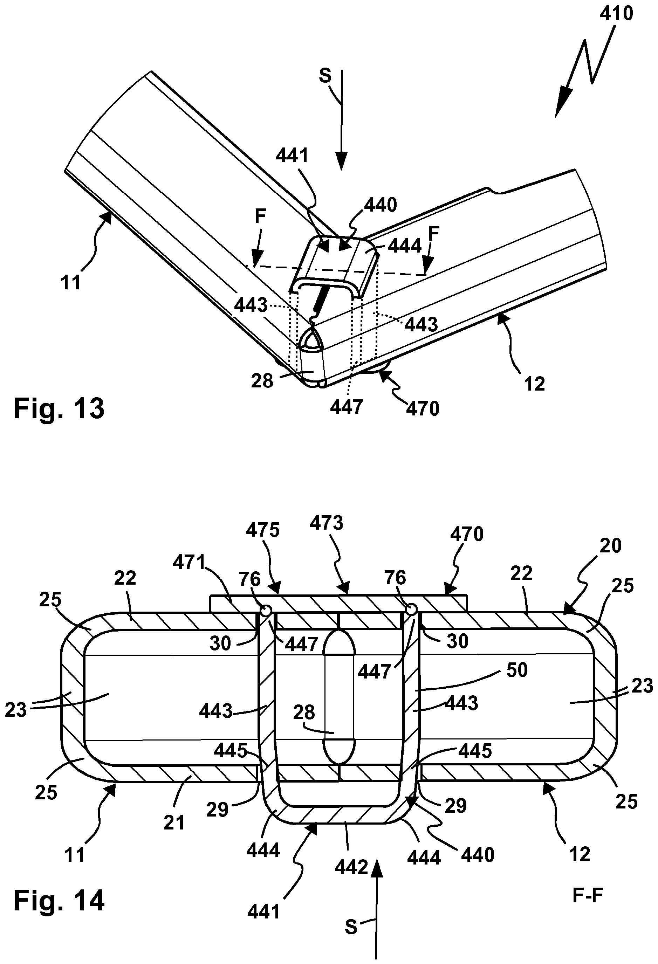

Bei den vorherigen Ausführungsbeispielen war die jeweilige Klammer durch die Trägerkomponenten vollständig durchgesteckt. Dies muss aber nicht sein, was am Ausführungsbeispiel der Figuren 13 und 14 deutlich wird.

Eine Klammer 441 einer Klammeranordnung 440, mit denen die Trägerkomponenten 11, 12 miteinander verbunden sind, weist einen Grundschenkel 442 auf, der mit Krümmungsabschnitten 444 in Schrägabschnitte 445 übergeht, die in den Klammeraufnahmen 29 zu liegen kommen. Die Schrägabschnitte 445 sorgen für eine Verspannung der Trägerkomponenten 11, 12 zueinander hin, wenn die Klammer 441 in Richtung der Steckrichtung S belastet ist. Diese Kraftbeaufschlagung oder Abstützung in der Steckrichtung S leistet eine Sicherungsanordnung 473 mit einem Sicherungselement 470. Das Sicherungselement 470 bildet gleichzeitig noch ein Verbindungselement 475 zur Verbindung der Seitenschenkel 443 der Klammer 441. Die freien Endbereiche oder Stützabschnitte 447 der Seitenschenkel 443 der Klammer 441 sind durch die Klammeraufnahmen 30 durchgesteckt, sodass ihre Stirnseiten frontal an dem Sicherungselement 470, dass beispielsweise eine Platte 471 umfasst, zu liegen kommen. Dort sind vorzugsweise Klebeverbindungen oder Schweißverbindungen 76 vorgesehen, so dass die freien Enden der Seitenschenkel 443 mit dem Sicherungselement 470 stoffschlüssig verbunden sind.

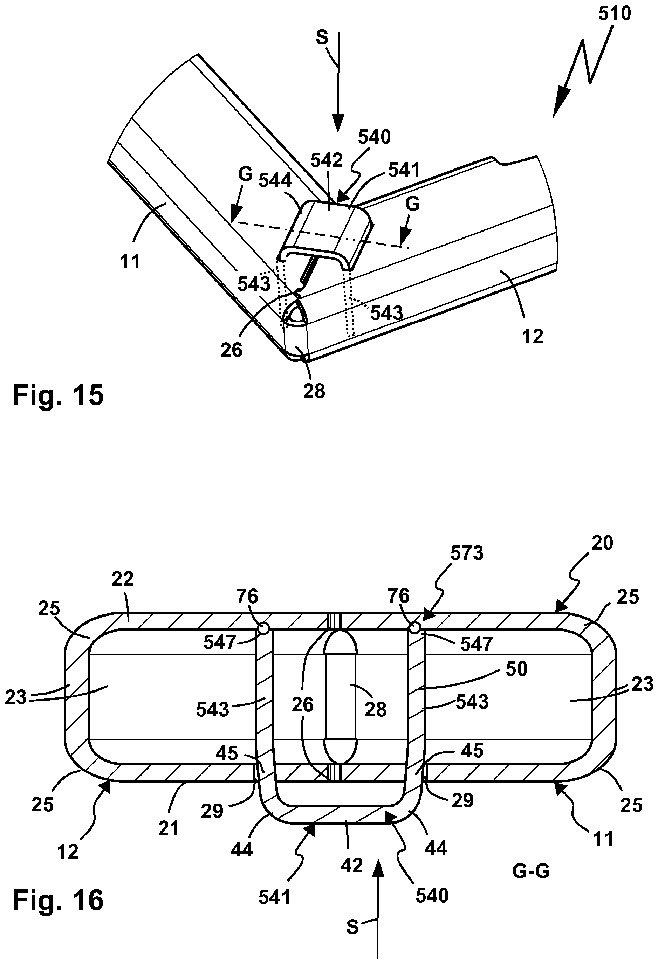

Es ist bei einer Trägeranordnung aber auch möglich, dass eine Trägerkomponente oder beide Trägerkomponenten als ein Sicherungselement gegen ein Ausziehen einer jeweiligen Klammer entgegen der Steckrichtung S wirken und/oder als ein Verbindungselement zum Halten der Seitenschenkel der Klammer zusätzlich zu dem Grundschenkel dient. Das wird am Ausführungsbeispiel gemäß Figuren 15 und 16 deutlich.

Bei einer Trägeranordnung 510, die ebenfalls die Halterung 13 oder mehrere derartige Halterungen aufweisen kann, sind deren Trägerkomponenten 11, 12 beispielsweise durch Klammeranordnungen 540 verbunden. Die Klammeranordnungen 540 umfassen Klammern 541, deren Grundschenkel 42 mit Krümmungsabschnitten 44 in Schrägabschnitte 45 von Seitenschenkeln 543 übergehen, die in der erläuterten Weise in den Klammeraufnahmen 29 im Sinne einer Verspannung wirken. Die freien Endbereiche der Seitenschenkel 543 dringen jedoch in die Trägerkomponenten 11, 12 nicht ein, d.h. die Klammeraufnahmen 30 sind nicht vorgesehen. Vielmehr bilden die freien Endbereiche der Seitenschenkel 543 Stützschenkel oder Stützabschnitte 547, deren Stirnseiten mit den Trägerkomponenten 11, 12 verbunden sind, vorzugsweise stoffschlüssig. Beispielsweise sind zwischen den Stützabschnitten 547 und den Innenseiten der Seitenwände 22 Schweißverbindungen 76 oder alternativ Klebeverbindungen vorgesehen. Dadurch sind einerseits die Klammern 541 an einem Ausziehen entgegen der Steckrichtung S aus den Trägerkomponenten 11, 12 gehindert. Zudem können die Seitenschenkel 543 nicht in einem Sinne voneinander weg oder aufeinander zu bewegt werden, wodurch die Fixierung der Trägerkomponenten 11, 12 gut ist.

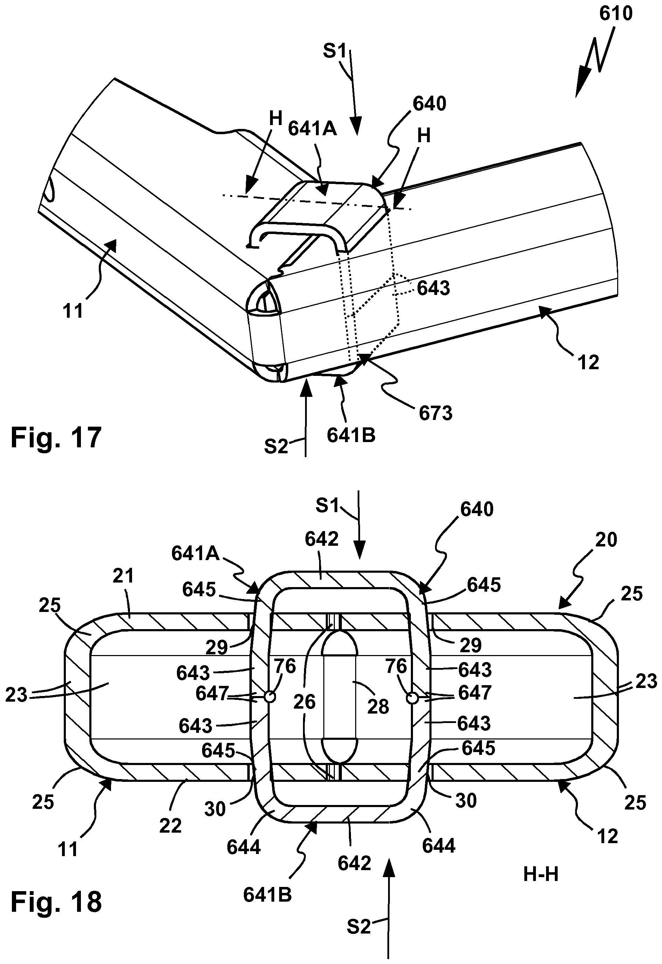

Am Ausführungsbeispiel gemäß Figuren 17, 18 wird deutlich, dass eine Klammerung auch mit mehreren Klammern ohne weiteres möglich ist, beispielsweise von einander entgegengesetzten Seiten der Trägerkomponenten 11, 12 einer Trägeranordnung 610 her. Die dort verwendeten Klammeranordnungen 640 umfassen beispielsweise Klammern 641A und 641B, die im Grundsatz ähnlich aufgebaut sind. Die Klammern 641A und 641B sind entlang von Steckrichtung in S1 und S2 von den Seitenwänden 22 und 21 her in die Trägerkomponenten 11, 12 eingesteckt.

Die Klammern 641A und 641B haben jeweils Grundschenkel 642, die zweckmäßigerweise parallel zur Seitenwand 21, 22 verlaufen oder dieser jedenfalls gegenüberliegen. Von den Grundschenkeln 642 weg erstrecken sich Schrägabschnitte 645 der Klammern 641, die in den Klammeraufnahmen 29, 30 zu liegen kommen und dort im Sinne einer Verspannung der Trägerkomponenten 11, 12 zueinander hin wirken.

An dieser Stelle sei aber besonders betont, dass diese Verspannung durch die Schrägabschnitte 45 wie auch bei sämtlichen vorherigen Beispielen eine vorteilhafte Maßnahme darstellt und nicht in jedem Fall vorhanden sein muss.

Die Seitenschenkel 643 der Klammern 641 liegen mit ihren Stirnseiten aneinander an, vorzugsweise flächig. Dort sind vorzugsweise Schweißverbindungen 76 vorgesehen. Alternativ wäre ohne weiteres auch eine Klebeverbindung möglich. Die Klammern 641 können also nicht entgegen ihrer jeweiligen Steckrichtung S aus den Trägerkomponenten 11, 12 herausgezogen werden.

An dieser Stelle sei erwähnt, dass Trägerkomponenten 12 aufgrund der Verjüngungen 17 jeweils eine seitliche Aussparung haben, durch die hindurch ein Innenraum im Verbindungsbereich der Trägerkomponenten 11, 12 zugänglich ist, so dass beispielsweise die Klammern 641 stirnseitig miteinander verschweißt oder verklebt werden können. Dieser Zugangsraum oder Innenraum ist beispielsweise auch für die Verschweißung 76 der Stützabschnitte 547 der Klammern 541 mit der Seitenwand 22 nutzbar.

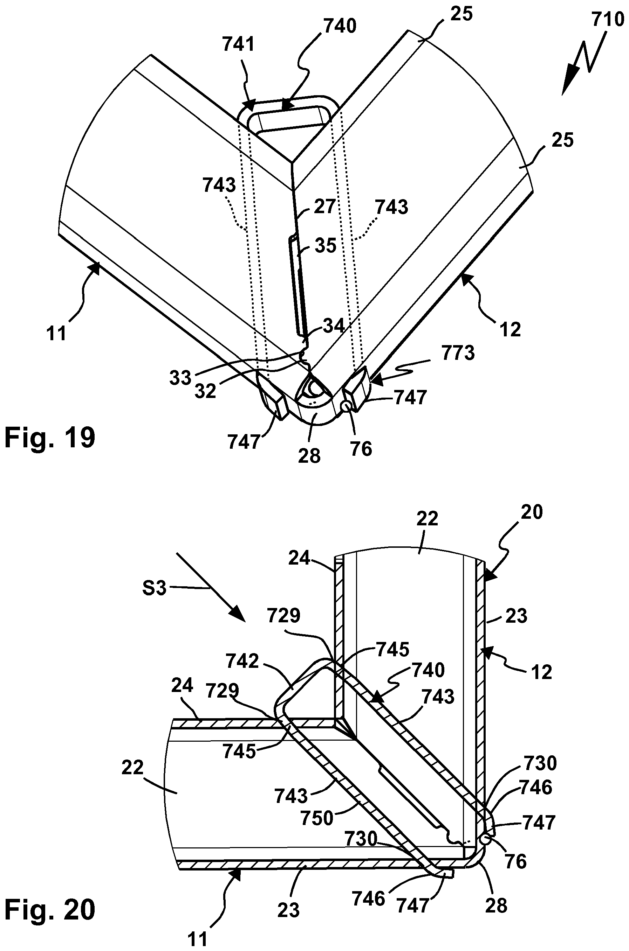

Bei vorherigen Ausführungsbeispielen wurde eine jeweilige Klammeranordnung von den Flachseiten oder Breitseiten der jeweiligen Profilteile 20 her montiert. Bei der Trägeranordnung 710 gemäß Figuren 19, 20 verläuft eine Steckrichtung S3 von den Schmalseiten oder den Seitenwänden 23, 24 her. Zwar wäre es prinzipiell möglich, die Klammern 741 der Klammeranordnungen 740 von einer Außenecke her, also von der Seite der Verbindungsabschnitte 28 her zu montieren bzw. in die Trägerkomponenten 11, 12 einzustecken. Dies wäre beispielsweise dann vorteilhaft, wenn dieser Verbindungsbereich oder Verbindungsabschnitt 28 nicht vorhanden ist. In diesem Fall könnte man beispielsweise in der Art der Klammeranordnung 640 von einander entgegengesetzten Seiten her jeweils eine Klammer einstecken, die dann eine Brücke zwischen den Trägerkomponenten 11, 12 darstellt, wie dies beispielsweise bei der Klammer 741 der Fall ist.

Ein Grundschenkel 742 der Klammer 741 geht mit geraden Abschnitten oder vorteilhaft mit Schrägabschnitten 745 in mittlere Abschnitte 750 von Seitenschenkeln 743 über, die vom Grundschenkel 742 winkelig, beispielsweise etwa rechtwinkelig, abstehen. Der Grundschenkel 742 kommt sozusagen in einem Inneneckbereich der Verbindung zwischen den Trägerkomponenten 11, 12 zu liegen. Der Grundschenkel 742 und der Verbindungsabschnitt 28 liegen einander gegenüber. Somit ist jeweils ein fester Verbindungsbereich zwischen den Trägerkomponenten 11, 12 geschaffen.

Die Schrägabschnitte 745 greifen in Klammeraufnahmen 729 an den Seitenwänden 24 ein und durchdringen diese. Die mittleren Abschnitte 750 verlaufen im Hohlraum der Profilteile 20, während freie Endbereiche Klammeraufnahmen 730 an den Seitenwänden 23 durchsetzen. Außerhalb der Seitenwände 23 oder im Bereich der Klammeraufnahmen 730 sind an den Seitenschenkeln 743 Abwinkelungsabschnitte 746 vorgesehen. Die sich daran anschließenden Stützabschnitte 747 verlaufen schräg geneigt zu den mittleren Abschnitten 750. Vorzugsweise ist es vorgesehen, dass die Stützabschnitte 747 flächig an den Außenseiten der Profilteile 20, also den Seitenwänden 23 anliegen. Im Ausführungsbeispiel sind die Stützabschnitte 747 zueinander hin und somit zur Außenecke der Verbindung zwischen den Trägerkomponenten 11, 12 geneigt. Es wäre aber auch möglich, dass einer oder beide der Stützabschnitte 747 entgegengesetzt abgewinkelt ist, beispielsweise ähnlich wie beim Ausführungsbeispiel von Figur 4, 5.

Die Stützabschnitte 747 können zudem mit mindestens einem der Profile 20 verbunden sein, beispielsweise durch eine Schweißverbindung 76 oder eine entsprechende Klebeverbindung. Mithin bewirken die Stützabschnitte 747, dass die Klammer 741 nicht entgegen der Steckrichtung S3 aus den Trägerkomponenten 11, 12 herausgezogen werden kann. Weiterhin tragen die schräg geneigten oder jedenfalls nicht mit der Steckrichtung S3 fluchtenden Stützabschnitte 747 dazu bei, dass die Schrägabschnitte 745 die beiden Trägerkomponenten 11, 12 zueinander hin verspannen.

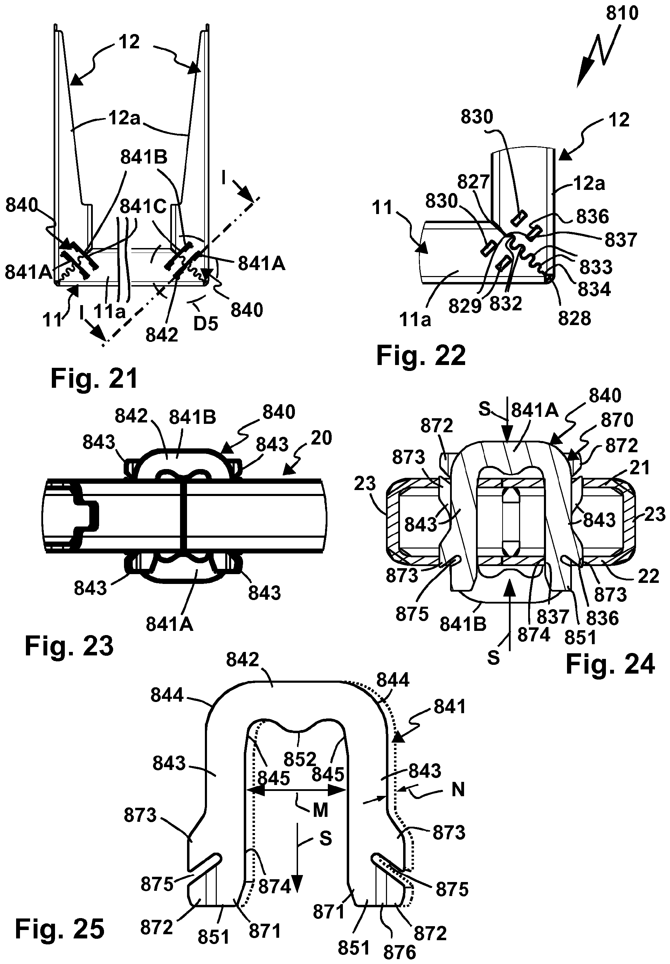

Bei dem Ausführungsbeispiel gemäß Figuren 21 - 25 sind die bereits erläuterten Seitenträger 12a mit dem Querträger 11a, also zweiten Trägerkomponenten 12 mit einer ersten Trägerkomponente 11, einer Trägeranordnung 10 verbunden, allerdings mit einer Klammeranordnung 840, die jeweils zwei Klammern 841A und 841B umfassen. Aus Gründen der Vereinfachung wird nur das in Figur 21 rechts dargestellte Klammerpaar der Klammern 841A, 841B erläutert. Die andere Klammerverbindung ist gleichartig.

Die Klammern 841 haben jeweils einen Grundschenkel 842, von dem Seitenschenkel 843 abstehen. Die Seitenschenkel 843 gehen mit Krümmungsabschnitten 844 in den Grundschenkel 842 über. Entsprechend der bereits erläuterten Schrägabschnitte 45 haben auch die Klammern 841 Schrägabschnitte, nämlich Schrägabschnitte 845, die schräg geneigt zu der Steckrichtung S sind. Ausgehend vom Grundschenkel 842 verlaufen die Schrägabschnitte 845 schräg in einem Sinne voneinander weg in Richtung freier Endbereiche 851 der Klammern 841.

Die Grundschenkel 842 können in optional mit Stützabschnitten 852 an den Trägerkomponenten 11, 12 abstützen, beispielsweise an der oberen oder unteren Seitenwand 21, 22. Auf diesem Wege kann z.B. bewirkt werden, dass die Schrägabschnitte 845 in Klammeraufnahmen 829 an den Seitenwänden 21, 22 im Sinne einer Verspannung der Trägerkomponenten 11, 12 zueinander hin wirken.

Die Klammern 841 sind nämlich voneinander entgegengesetzten Seiten her in die Trägerkomponenten 11, 12 eingesteckt. Dabei sind die Seitenschenkel 843 in Klammeraufnahmen 829 und 830 eingesteckt. Zweckmäßigerweise stehen die freien Endbereiche 851 vor die Klammeraufnahmen 830 vor. In der Nähe der Grundschenkel 842 sind die Seitenschenkel 843 in die Klammeraufnahmen 829 eingesteckt, wo die Schrägabschnitte 845 im Sinne der bereits erläuterten Verspannung wirken.

Für eine Klammeranordnung 840 sind in den Trägerkomponenten 11, 12 jeweils in der oberen Seitenwand 21 und der unteren Seitenwand 22 jeweils eine Klammeraufnahme 829 und eine Klammeraufnahme 830 vorgesehen. Für jede Klammeranordnung 840 ist vorgesehen, dass jede Klammer 841A, 841B in voneinander separate Klammeraufnahmen 829, 830 eingesteckt ist. Die Klammeraufnahmen 829, 830 sind also voneinander beabstandet. Die Klammern 841A, 841B haben keinen direkten Kontakt zueinander. Allerdings wirken die sozusagen einmal von oben und einmal von unten in die Trägerkomponenten 11, 12 bzw. in die Seitenwände 21 und die Seitenwände 22 eingesteckten Klammern 841A, 841B, dass an jeder oberen und unteren Seitenwand 21, 22 jeweils ein Grundschenkel 842 im Sinne einer Verspannung bzw. im Sinne eines Haltens der Trägerkomponenten 11, 12 wirkt.

Die Klammern 841 sind plattenartig und sehr schmal. Somit wäre es prinzipiell auch ohne weiteres möglich, dass in einer jeweiligen Klammeraufnahme 829, 830 zwei Klammern 841 aufgenommen sind, die dann beispielsweise mit ihren Flachseiten aneinander anliegen. Das ist in Figur 21 angedeutet, wo zum Beispiel im Bereich der Klammern 841B eine von derselben Seite her wie die Klammern 841A eingesteckte Klammer 841C vorgesehen sein kann..

Die Klammern 842 sind durch eine Sicherungsanordnung 870 gesichert, die dadurch gebildet ist, dass die freien Endbereiche 851, welche vor die Seitenwand 21 oder Seitenwand 22 vorstehen, durch eine Umformung gesichert sind. An den freien Endbereichen 851 haben Stützvorsprünge 871, die vor die Seitenwände 21, 22 vorstehen sowie Sicherungsabschnitte 872, die quer zu den Klammeraufnahmen 830 umgeformt sind, so dass sie sich an der freien Außenseite der Seitenwand 21 oder 22 abstützen und somit die jeweilige Klammer 841 gegen ein Ausziehen entgegen der Steckrichtung S in den Klammeraufnahmen 829, 830 gesichert ist.

Zwischen den Stützabschnitten 842 und einem Armabschnitt eines jeweiligen Seitenschenkels 843, der der zum Grundschenkel 842 führt, ist noch ein Stützvorsprung 873 vorgesehen, der sich an einer Schmalseite 836 einer jeweiligen Klammeraufnahme 830 abstützt, während sich eine Innenseite 874 eines Stützschenkels 843 an der gegenüberliegenden Schmalseite einer Klammeraufnahme 830 abstützt. Somit ist also der Seitenschenkel 843 quer zur Steckachse S in der jeweiligen Klammeraufnahme 830 unverschieblich gehalten.

Zwischen dem Stützabschnitt 842 und dem Stützvorsprung 873 ist ein Schlitz 875 vorgesehen, der ein Umbiegen bzw. Umformen des Stützabschnitts 872 relativ zum Stützvorsprung 873 ermöglicht.

Beispielsweise ist der Stützabschnitt 872 wellenförmig quer zur Steckrichtung S umgeformt. Insbesondere ist zwischen dem Stützabschnitt 872 und dem Stützvorsprung 871 ein quer verlaufender oder diagonal verlaufender Abschnitt 876 vorgesehen.

Die Trägerkomponenten 11, 12 sind mit einem Verbindungsabschnitt 828 sozusagen über Eck miteinander verbunden. Die oberen und unteren Seitenwände 21, 22 stützen sich mit Gehrungsflächen 827 aneinander ab. Dort sind Formschlussvorsprünge 832 und Formschlussaufnahmen vorgesehen, in welche die Formschlussvorsprünge 832 formschlüssig eingreifen insbesondere sind die Formschlussvorsprünge 832 und die Formschlussaufnahmen komplementär und/oder wellenförmig ausgestaltet. Zweckmäßigerweise ist vorgesehen, dass im Bereich einer Innenecke, d.h. dem Verbindungsabschnitt 828 gegenüberliegend, keine Formschlussvorsprünge 832 und Formschlussaufnahmen vorgesehen sind und somit die Seitenwände 21, 22 flächig aneinander anliegen. Von der Innenecke ausgehend in Richtung des Verbindungsabschnitts 828 hin sind relativ weit vorstehende Formschlussvorsprünge 832 und entsprechend tiefe Formschlussaufnahmen vorgesehen. Die Formschlussvorsprünge 833, die näher beim Verbindungsabschnitt 828 sind, sind weniger lang als die Formschlussvorsprünge 832. Nahe bei Verbindungsabschnitt 828 sind in einem Bereich 834 keine Formschlusskonturen vorgesehen. Dort liegen die Trägerkomponenten 11, 12 mit den Schmalseiten ihrer Seitenwände 21, 22 flächig auf Gehrung aneinander an. Dadurch ist ein Fügen bzw. aneinander Biegen der Trägerkomponenten 11, 12 über Eck erleichtert, gleichzeitig eine optimale Abstützung gegenüber einer Scherbewegung gewährleistet.

Bevorzugt ist die Klammer 841 plattenartig oder aus einem Plattenmaterial hergestellt. Eine Stärke oder Querbreite N eines Klammerschenkels 843 ist vorzugsweise deutlich kleiner, insbesondere fünf bis zehnmal kleiner als ein Abstand M zwischen den Klammerschenkeln 843, siehe Figur 25.

## Patentansprüche

1. Trägeranordnung für eine Anhängekupplung oder einen Lastenträger, wobei die Trägeranordnung (10) einen Querträger (11a) zur Montage an einem Heck (91) einer Karosserie (92) eines Kraftfahrzeugs (90) sowie mindestens eine an dem Querträger (11a) angeordnete Halterung (13) für eine Anhängekupplung oder für ein Kupplungsteil eines Lastenträgers umfasst, wobei die Trägeranordnung (10) eine erste Trägerkomponente (11) und eine zweite Trägerkomponente (12) aufweist, die mit der ersten Trägerkomponente (11) verbunden ist, **dadurch gekennzeichnet, dass** die erste Trägerkomponente (11) und die zweite Trägerkomponente (12) durch eine Klammeranordnung (40) mit mindestens einer Klammer (41) verbunden sind, die in der Seitenansicht U-förmig ist und einen Grundschenkel (42) und von dem Grundschenkel (42) abstehende Seitenschenkel (43) aufweist, die in Klammeraufnahmen (29, 30) der ersten Trägerkomponente (11) und der zweiten Trägerkomponente (12) eingreifen.

2. Trägeranordnung (10) nach Anspruch 1, **dadurch gekennzeichnet, dass** die erste Trägerkomponente (11) und die zweite Trägerkomponente (12) anhand eines Verbindungsabschnitts (28) zumindest teilweise einstückig und/oder stoffschlüssig miteinander verbunden sind.

3. Trägeranordnung nach Anspruch 2, **dadurch gekennzeichnet, dass** der Grundschenkel (42) der mindestens einen Klammer (41) dem Verbindungsabschnitt (28) gegenüberliegt oder zu dem Verbindungsabschnitt (28) winkelig, insbesondere rechtwinkelig, ist und/oder der Verbindungsabschnitt (28) an einem äußeren Eckbereich zwischen den Trägerkomponenten (11, 12) angeordnet ist und/oder der Verbindungsabschnitt (28) zwischen den Seitenschenkeln der mindestens einen Klammer (41) verläuft.

4. Trägeranordnung nach einem der vorhergehenden Ansprüche, **dadurch gekennzeichnet, dass** die erste Trägerkomponente (11) und die zweite Trägerkomponente (12) in einem Winkel, insbesondere einem Gehrungswinkel, winkelig zueinander angeordnet sind und/oder dass sich die erste Trägerkomponente (11) und die zweite Trägerkomponente (12) mit Stützabschnitten (47), insbesondere über ihren gesamten Querschnitt, aneinander abstützen und die mindestens eine Klammer (41) die Stützabschnitte (47) überbrückt.

5. Trägeranordnung nach einem der vorhergehenden Ansprüche, **dadurch gekennzeichnet, dass** die erste Trägerkomponente (11) und die zweite Trägerkomponente (12) mit Formschlusskonturen (26) formschlüssig, insbesondere im Sinne einer Abstützung gegen eine Scherbewegung, ineinander eingreifen.

6. Trägeranordnung nach einem der vorhergehenden Ansprüche, **dadurch gekennzeichnet, dass** mindestens eine der Trägerkomponenten (11, 12) als, insbesondere rohrförmiges und/oder an seinem Außenumfang geschlossenes, Profilteil (20) ausgestaltet ist und/oder dass mindestens eine Trägerkomponente (11, 12) einen Bestandteil des Querträgers (11a) oder eines mit dem Querträger (11a) verbundenen Seitenträgers (12a) zur Verbindung mit der Karosserie (92) des Kraftfahrzeugs (90) bildet.

7. Trägeranordnung nach einem der vorhergehenden Ansprüche, **dadurch gekennzeichnet, dass** mindestens ein Seitenschenkel (43) der Klammer (41) mit Komponentenabschnitten, insbesondere Wandabschnitten oder Seitenwänden, mindestens einer der Trägerkomponenten (11, 12) verbunden und/oder in Eingriff ist, die einen Abstand zueinander aufweisen, wobei der mindestens eine Seitenschenkel (43) eine Klammeraufnahme (29, 30) eines Komponentenabschnitts durchsetzt und in eine Klammeraufnahme (29, 30) des anderen Komponentenabschnitts eingreift oder mit dem anderen Komponentenabschnitt stoffschlüssig verbunden ist.

8. Trägeranordnung nach einem der vorhergehenden Ansprüche, **dadurch gekennzeichnet, dass** die Klammer (41) zumindest teilweise plattenartig ist und/oder der Grundschenkel (42) der Klammer (41) und/oder mindestens einer der Seitenschenkel (43) eine plattenartige Gestalt aufweisen.

9. Trägeranordnung nach einem der vorhergehenden Ansprüche, **dadurch gekennzeichnet, dass** mindestens ein Seitenschenkel (43) der mindestens einen Klammer (41) durch eine Sicherungsanordnung (73) gegen ein Ausziehen aus den Klammeraufnahmen (29, 30) entgegen einer Steckrichtung (S), in welcher die Klammer (41) in die Trägerkomponenten (11, 12) eingesteckt ist, gesichert ist.

10. Trägeranordnung nach Anspruch 10, **dadurch gekennzeichnet, dass** die Sicherungsanordnung (73) mindestens einen schräg oder quer zu der Steckrichtung (S) umgeformten, insbesondere umgebogenen, Stützabschnitt (47) eines Seitenschenkels der Klammer (41) und/oder mindestens eine Schweißverbindung (76) zwischen dem Seitenschenkel (43) und der Trägerkomponente (11, 12) umfasst, mit der der Seitenschenkel (43) in Eingriff ist und/oder dass einerseits die Sicherungsanordnung (73) und/oder der Stützabschnitt (47) der mindestens einen Klammer (41) und andererseits der Grundschenkel (42) der mindestens einen Klammer (41) an einander entgegengesetzten Seiten der Trägerkomponente (11, 12) vorgesehen sind, mit der die Klammer (41) in Eingriff ist, und/oder dass die Sicherungsanordnung (73) mindestens ein Sicherungselement (70) umfasst, mit dem der mindestens eine Seitenschenkel (43) formschlüssig und/oder stoffschlüssig, insbesondere anhand einer Schweißverbindung (76), verbunden ist und/oder das von dem mindestens einen Seitenschenkel (43) durchdrungen ist und/oder plattenförmig ist oder eine Platte umfasst und/oder sich insbesondere flächig an der Trägerkomponente (11, 12) abstützt, mit welcher der mindestens eine Seitenschenkel (43) in Eingriff ist.

11. Trägeranordnung nach einem der vorhergehenden Ansprüche, dass die Seitenschenkel (43) entgegen einer Kraft voneinander weg durch ein von den Trägerkomponenten (11, 12) separates Verbindungselement (75), insbesondere durch ein entgegen der Steckrichtung (S) in die Trägerkomponenten (11, 12) abstützendes oder wirkendes Sicherungselement (70), im Abstand zu dem Grundschenkel (42) miteinander verbunden sind, wobei zweckmäßigerweise vorgesehen ist, dass die Seitenschenkel (43) stoffschlüssig mit dem Verbindungselement (75) verbunden sind und/oder das Verbindungselement (75) an Durchtrittsöffnungen (72) durchdringen und an einer von dem Grundschenkel (42) abgewandten Seite des Verbindungselements (75) schräg oder quer zu einer Steckrichtung durch das Verbindungselement (75) umgeformt sind.

12. Trägeranordnung nach einem der vorhergehenden Ansprüche, **dadurch gekennzeichnet, dass** die Klammeranordnung (40) mindestens zwei Klammern (641A, 641B, 841A, 841B) umfasst, die an derselben Seite der Trägerkomponenten (11, 12) nebeneinander oder voneinander entgegengesetzten Seiten her in die Trägerkomponenten (11, 12) eingreifen und/oder einen Abstand zueinander aufweisen.

13. Trägeranordnung nach Anspruch 12, **dadurch gekennzeichnet, dass** , dass die Seitenschenkel (43) der von einander entgegengesetzten Seiten her in die Trägerkomponenten (11, 12) eingreifenden Klammern (641A, 641B, 841A, 841B) miteinander verbunden sind, insbesondere durch eine Schweißverbindung (76) oder Klebeverbindung, und/oder mit Stirnseiten oder mit sich parallel zur Steckachse erstreckenden Flächen flächig aneinander anliegen und/oder in voneinander separate Klammeraufnahmen (829, 830) eingreifen und/oder mit ihren freien Endbereichen vor diejenige Seite der Trägerkomponenten (11, 12) vorstehen, an der der Grundschenkel der jeweiligen anderen Klammer (841A, 841B) angeordnet ist.

14. Trägeranordnung nach einem der vorhergehenden Ansprüche, **dadurch gekennzeichnet, dass** zwischen einem Seitenschenkel (43) der mindestens einen Klammer (41) und der Klammeraufnahme (29, 30), in die der Seitenschenkel (43) eindringt, eine als Einführhilfe und/oder als Spannfläche ausgestaltete Schrägfläche (45) vorgesehen ist, wobei die Spannfläche im Sinne einer Verspannung der beiden Trägerkomponenten (11, 12) zueinander hin ausgestaltet ist.

15. Trägeranordnung nach einem der vorhergehenden Ansprüche, **dadurch gekennzeichnet, dass** die mindestens eine Klammer (41) und/oder mindestens eine mit der Klammer (41) zusammenwirkende Klammeraufnahme (29, 30) eine Schrägflächenanordnung (45) aufweist, die bei einer Betätigung oder Belastung der Klammer (41) in die Steckrichtung (S) in die Trägerkomponenten (11, 12) hinein im Sinne einer Verspannung der beiden Trägerkomponenten (11, 12) durch die mindestens eine Klammer (41) zueinander hin wirkt.

## Claims

1. Support assembly for a trailer coupling or a load carrier, wherein the support assembly (10) includes a cross-member (11a) for fitting to a rear section (91) of a body (92) of a motor vehicle (90), together with at least one mounting (13) fitted to the cross-member (11a) for a trailer coupling or for a coupling part of a load carrier, wherein the support assembly (10) has a first support component (11) and a second support component (12) which is connected to the first support component (11), **characterised in that** the first support component (11) and the second support component (12) are connected by a clip arrangement (40) with at least one clip (41) which in a side view is U-shaped and has a base limb (42) with side limbs (43) extending from the base limb (42) and engaging in clip locations (29, 30) of the first support component (11) and the second support component (12).

2. Support assembly (10) according to claim 1, **characterised in that** the first support component (11) and the second support component (12) are joined together with the aid of a connecting section (28) at least partly integrally and/or by material bonding.

3. Support assembly according to claim 2, **characterised in that** the base limb (42) of the clip or clips (41) lies opposite the connecting section (28) or is at an angle to the connecting section (28), in particular a right-angle, and/or the connecting section (28) is located at an outer edge section between the support components (11, 12), and/or the connecting section (28) runs between the side limbs of the clip or clips (41).

4. Support assembly according to any of the preceding claims, **characterised in that** the first support component (11) and the second support component (12) are arranged at an angle, in particular a mitre square, to one another, and/or that the first support component (11) and the second support component (12) rest on one another with support sections (47), in particular over their whole cross-section, and the clip or clips (41) bridges or bridge the support sections (47).

5. Support assembly according to any of the preceding claims, **characterised in that** the first support component (11) and the second support component (12) engage with one another positively with form-fitting contours (26), in particular for the purpose of support against a shearing movement.

6. Support assembly according to any of the preceding claims, **characterised in that** the support component or components (11, 12) is or are in the form of a profile section (20), in particular tubular and/or closed at its outer periphery, and/or that the support component or components (11, 12) forms or form part of the cross-member (11a) or a side member (12a) connected to the cross-member (11a) for joining to the body (92) of the motor vehicle (90).

7. Support assembly according to any of the preceding claims, **characterised in that** at least one side limb (43) of the clip (41) is connected to or in engagement with component sections, in particular wall sections or side walls, of at least one of the support components (11, 12), which have clearance from one another, wherein the side limb or limbs (43) passes or pass through a clip location (29, 30) of one component section and engages or engage in a clip location (29, 30) of the other component section or make a material bond with the other component section.

8. Support assembly according to any of the preceding claims, **characterised in that** the clip (41) is at least partly plate-shaped and/or the base limb (42) of the clip (41) and/or at least one of the side limbs (43) has a plate-like shape.

9. Support assembly according to any of the preceding claims, **characterised in that** at least one side limb (43) of the clip or clips (41) is secured by a securing arrangement (73) against pulling out of the clip locations (29, 30) against an insertion direction (S) in which the clip (41) is inserted into the support components (11, 12).

10. Support assembly according to claim 10, **characterised in that** the securing arrangement (73) includes at least one support section (47) of a side limb of the clip (41), formed at an angle or perpendicular to the insertion direction (S), in particular bent over, and/or at least one welded joint (76) between the side limb (43) and the support component (11, 12), with which the side limb (43) is in engagement, and/or that on the one hand the securing arrangement (73) and/or the support section (47) of the clip or clips (41) and on the other hand the base limb (42) of the clip or clips (41) are provided on opposite sides of the support component (11, 12) with which the clip (41) is in engagement, and/or that the securing arrangement (73) includes at least one securing element (70) with which the side limb or limbs (43) is or are joined positively and/or by material bonding, in particular with the aid of a welded joint (76), and/or which is penetrated by the side limb or limbs (43) and/or is plate-shaped or comprises a plate, and/or which rests flatly on the support component (11, 12) with which the side limb or limbs (43) is or are in engagement.

11. Support assembly according to any of the preceding claims, **characterised in that** the side limbs (43) are joined together, against a force moving them away from one another, by a connecting element (75) separate from the support components (11, 12), in particular by a securing element (70) supporting or acting against the insertion direction (S) into the support components (11, 12), with clearance from the base limb (42), wherein it is expediently provided that the side limbs (43) are materially bonded to the connecting element (75) and/or penetrate the connecting element (75) at through openings (72) and are formed at a side of the connecting element (75) facing away from the base limb (42), at an angle to or transversely to a direction of insertion by the connecting element (75).

12. Support assembly according to any of the preceding claims, **characterised in that** the clip arrangement (40) comprises at least two clips (641A, 641B, 841A, 841B) which engage in the support components (11, 12) on the same side of the support components (11, 12) next to one another or from opposite sides, and/or have clearance from one another.

13. Support assembly according to claim 12, **characterised in that** the side limbs (43) of the clips (641A, 641B, 841A, 841B) engaging in the support components (11, 12) from opposite sides are joined together, in particular by means of a welded joint (76) or adhesive bond and/or lie flat against one another with end faces or with faces extending parallel to the insertion axis, and/or engage in clip locations (829, 8 30) separate from one another, and/or protrude with their free end sections from that side of the support components (11, 12) on which the base limb of the respective other clip (841A, 841B) is located.

14. Support assembly according to any of the preceding claims, **characterised in that**, between one side limb (43) of the clip or clips (41) and the clip locations (29, 30) into which the side limb (43) penetrates, there is provided an inclined surface (45) designed as insertion guide and/or as clamping surface, wherein the clamping surface is designed for the purpose of bracing the two support components (11, 12) relative to one another.

15. Support assembly according to any of the preceding claims, **characterised in that** the clip or clips (41) and/or at least one clip location (29, 30) interacting with the clip (41) has or have an inclined surface arrangement (45) which, under actuation or loading of the clip (41), acts in the direction of insertion (S) into the support components (11, 12) for the purpose of bracing of the two support components (11, 12) by the clip or clips (41).

## Revendications

1. Ensemble de support pour un attelage de remorque ou un support de charges, dans lequel l'ensemble de support (10) comprend une traverse (11a) destinée à être montée au niveau d'un hayon (91) d'une carrosserie (92) d'un véhicule automobile (90) ainsi qu'au moins une fixation (13) disposée au niveau de la traverse (11a) pour un attelage de remorque ou pour une partie d'attelage d'un support de charges, dans lequel l'ensemble de support (10) présente un premier composant de support (11) et un second composant de support (12), qui est relié au premier composant de support (11), **caractérisé en ce que** le premier composant de support (11) et le second composant de support (12) sont reliés à au moins une attache (41) par un ensemble d'attaches (40), qui est en forme de U dans la vue latérale et présente une branche de base (42) et des branches latérales (43) dépassant de la branche de base (42), qui viennent en prise avec des logements d'attache (29, 30) du premier composant de support (11) et du second composant de support (12).

2. Ensemble de support (10) selon la revendication 1, **caractérisé en ce que** le premier composant de support (11) et le second composant de support (12) sont reliés l'un à l'autre au moins en partie d'un seul tenant et/ou par liaison de matière à l'aide d'une section de liaison (28).

3. Ensemble de support selon la revendication 2, **caractérisé en ce que** la branche de base (42) de l'au moins une attache (41) fait face à la section de liaison (28) ou forme un angle, en particulier un angle droit, par rapport à la section de liaison (28), et/ou la section de liaison (28) est disposée au niveau d'une zone de coin extérieure entre les composants de support (11, 12) et/ou la section de liaison (28) s'étend entre les branches latérales de l'au moins une attache (41).

4. Ensemble de support selon l'une quelconque des revendications précédentes, **caractérisé en ce que** le premier composant de support (11) et le second composant de support (12) sont disposés de manière angulaire l'un par rapport à l'autre selon un angle, en particulier un angle d'onglet, et/ou que le premier composant de support (11) et le second composant de support (12) prennent appui l'un au niveau de l'autre par des sections d'appui (47), en particulier par l'intermédiaire de la totalité de leur section transversale, et l'au moins une attache (41) surmonte les sections d'appui (47).

5. Ensemble de support selon l'une quelconque des revendications précédentes, **caractérisé en ce que** le premier composant de support (11) et le second composant de support (12) viennent en prise l'un avec l'autre par complémentarité de forme par des contours à complémentarité de forme (26), en particulier au sens d'un appui contre un déplacement de cisaillement.

6. Ensemble de support selon l'une quelconque des revendications précédentes, **caractérisé en ce qu'**au moins un des composants de support (11, 12) est configuré sous la forme d'une partie profilée (20), en particulier tubulaire et/ou fermée au niveau de sa périphérie extérieure, et/ou qu'au moins un composant de support (11, 12) fait partie intégrante de la traverse (11a) ou d'un support latéral (12a) relié à la traverse (11a), destiné à être relié à la carrosserie (92) du véhicule automobile (90).

7. Ensemble de support selon l'une quelconque des revendications précédentes, **caractérisé en ce qu'**au moins une branche latérale (43) de l'attache (41) est reliée et/ou est en prise à/avec des sections de composant, en particulier des sections de paroi ou des parois latérales, au moins d'un des composants de support (11, 12), qui présentent une distance les uns par rapport aux autres, dans lequel l'au moins une branche latérale (43) traverse un logement d'attache (29, 30) d'une section de composant et vient en prise avec un logement d'attache (29, 30) de l'autre section de composant ou est reliée par liaison de matière à l'autre section de composant.

8. Ensemble de support selon l'une quelconque des revendications précédentes, **caractérisé en ce que** l'attache (41) est au moins en partie de type plaque et/ou la branche de base (42) de l'attache (41) et/ou au moins une des branches latérales (43) présentent une forme de type plaque.

9. Ensemble de support selon l'une quelconque des revendications précédentes, **caractérisé en ce qu'**au moins une branche latérale (43) de l'au moins une attache (41) est bloquée par un ensemble de blocage (73) contre toute sortie hors des logements d'attache (29, 30) dans le sens opposé à une direction d'emboîtement (S), dans laquelle l'attache (41) est emboîtée dans les composants de support (11, 12).

10. Ensemble de support selon la revendication 10, **caractérisé en ce que** l'ensemble de blocage (73) comprend au moins une section d'appui (47) mise en forme de manière oblique ou de manière transversale par rapport à la direction d'emboîtement (S), en particulier cintrée, d'une branche latérale de l'attache (41) et/ou au moins une liaison par soudage (76) entre la branche latérale (43) et le composant de support (11, 12), avec lequel la branche latérale (43) est en prise, et/ou que d'une part l'ensemble de blocage (73) et/ou la section d'appui (47) de l'au moins une attache (41) et d'autre part la branche de base (42) de l'au moins une attache (41) sont prévus au niveau de côtés opposés les uns aux autres du composant de support (11, 12), avec lequel l'attache (41) est en prise, et/ou que l'ensemble de blocage (73) comprend au moins un élément de blocage (70), auquel l'au moins une branche latérale (43) est reliée par complémentarité de forme et/ou par liaison de matière, en particulier à l'aide d'une liaison par soudage (76), et/ou qui est traversé par l'au moins une branche latérale (43) et/ou est en forme de plaque ou comprend une plaque et/ou prend appui en particulier à plat au niveau du composant de support (11, 12), avec lequel l'au moins une branche latérale (43) est en prise.

11. Ensemble de support selon l'une quelconque des revendications précédentes, **caractérisé en ce que** les branches latérales (43) sont reliées les unes aux autres à distance par rapport à la branche de base (42) à l'encontre d'une force de manière éloignée les unes des autres par un élément de liaison (75) séparé des composants de support (11, 12), en particulier par un élément de blocage (70) de soutien ou agissant dans le sens opposé à la direction d'emboîtement (S) dans les composants de support (11, 12), dans lequel il est prévu de manière opportune que les branches latérales (43) sont reliées par liaison de matière à l'élément de liaison (75), et/ou traversent l'élément de liaison (75) au niveau d'ouvertures de passage (72) et sont mises en forme au niveau d'un côté, opposé à la branche de base (42), de l'élément de liaison (75) de manière oblique ou de manière transversale par rapport à une direction d'emboîtement par l'élément de liaison (75).

12. Ensemble de support selon l'une quelconque des revendications précédentes, **caractérisé en ce que** l'ensemble d'attaches (40) comprend au moins deux attaches (641A, 641B, 841A, 841B), qui viennent en prise avec les composants de support (11, 12) au niveau du même côté des composants de support (11, 12) côte à côte ou au niveau de côtés opposés les uns aux autres et/ou présentent une distance les unes par rapport aux autres.

13. Ensemble de support selon la revendication 12, **caractérisé en ce que** les branches latérales (43) des attaches (641A, 641B, 841A, 841B) venant en prise avec les composants de support (11, 12) depuis des côtés opposés les uns aux autres sont reliées les unes aux autres, en particulier par une liaison par soudage (76) ou une liaison par collage, et/ou reposent à plat les unes au niveau des autres par des côtés frontaux ou par des surfaces s'étendant de manière parallèle par rapport à l'axe d'emboîtement, et/ou viennent en prise avec des logements d'attache (829, 830) séparés les uns des autres et/ou font saillie par leurs zones d'extrémité libres du côté des composants de support (11, 12), au niveau duquel précisément la branche de base de l'autre attache (841A, 841B) est disposée.

14. Ensemble de support selon l'une quelconque des revendications précédentes, **caractérisé en ce qu'**est prévue, entre une branche latérale (43) de l'au moins une attache (41) et le logement d'attache (29, 30), dans lequel pénètre la branche latérale (43), une surface oblique (45) configurée sous la forme d'une aide à l'introduction et/ou sous la forme d'une surface de serrage, dans lequel la surface de serrage est configurée au sens d'un assemble par serrage des deux composants de support (11, 12) l'un en direction de l'autre.

15. Ensemble de support selon l'une quelconque des revendications précédentes, **caractérisé en ce que** l'au moins une attache (41) et/ou au moins un logement d'attache (29, 30) coopérant avec l'attache (41) présentent un ensemble de surfaces obliques (45), qui agissent dans le cas d'un actionnement ou d'une contrainte de l'attache (41) dans la direction d'emboîtement (S) dans les composants de support (11, 12) au sens d'un assemblage par serrage des deux composants de support (11, 12) par l'au moins une attache (41) l'un par rapport à l'autre.
